# EUROPEAN PATENT APPLICATION

(11) **EP 4 593 459 A1**
(43) Date of publication of application: **30.07.2025**
(21) Application number: 23867534.2
(22) Date of filing: 20.09.2023
(51) Int. Cl.: H04W 36/00

(54) **METHOD AND DEVICE USED FOR WIRELESS COMMUNICATION**

(30) Priority: 22.09.2022 CN 202211159274
(71) Applicant: Apogee Networks, LLC, Dallas, TX 75201 (US)
(72) Inventor: CHEN, Yu, Shanghai 201206 (CN); ZHANG, Xiaobo, Shanghai 201206 (CN)
(74) Representative: Gunzelmann, Rainer
(86) International application number: PCT/CN2023/119883
(87) International publication number: WO 2024/061247

(57) **Abstract**

Disclosed in the present application are a method and device used for wireless communication. The method comprises: receiving first signaling, wherein the first signaling comprises a first cell identity, and the first cell identity is configured for a target SpCell (Special Cell); and executing the first signaling, wherein the step of executing the first signaling comprises executing a target operation set. In the present application, better mobility management can be implemented by means of the first signaling.

## Description

### Technical Field

The present application relates to a transmission method and apparatus in a wireless communication system, to mobility management, and in particular to reducing latency and lowering complexity.

### Background Art

Application scenarios of future wireless communication systems are becoming more and more diversified, and different application scenarios have different performance requirements for the systems. In order to meet the different performance requirements of various application scenarios, the 3rd Generation Partner Project (3GPP) radio access network (RAN) #72nd plenary meeting decided to study the new radio technology (NR) (or Fifth Generation, 5G), and the 3GPP RAN #75th plenary meeting approved an NR work item (WI) and started the standardization work on NR.

In communications, both long term evolution (LTE) and 5G NR involve accurate reception of reliable information, an optimized energy efficiency ratio, determination of information validity, flexible resource allocation, a scalable system structure, efficient non-access layer information processing, low service interruption and drop rates, and support for low power consumption. This is of great significance to normal communication between base stations and user equipment, reasonable scheduling of resources, and balancing of system loads. It can be said to be the cornerstone of high throughput, meeting the communication needs of various services, improving spectrum utilization, and improving the quality of service. It is indispensable for enhanced Mobile BroadBand (eMBB), ultra reliable low latency communication (URLLC) and enhanced Machine Type Communication (eMTC). At the same time, there are extensive demands in industrial Internet of Things (IIoT), vehicular to X (V2X), device to device, unlicensed spectrum communication, user communication quality monitoring, network planning optimization, non terrestrial networks (NTNs), terrestrial networks (TNs), dual connectivity systems, radio resource management and multi-antenna codebook selection, signaling design, neighbor management, service management, and beamforming. Information transmission methods are divided into broadcast and unicast. Both transmission methods are essential for 5G systems because they are very helpful in meeting the above demands. UE can connect to networks directly or through a relay.

As the scenarios and complexity of the systems continue to increase, higher requirements are put forward for reducing the interruption rate, reducing latency, enhancing reliability, enhancing system stability, service flexibility, and power saving. At the same time, the compatibility between different versions and different systems also needs to be considered during system design.

The meanings of the concepts, terms and abbreviations in the present application can refer to 3GPP standards, including but not limited to:
https://www.3gpp.org/ftp/Specs/archive/21_series/21.905/21905-h10.zip
https://www.3gpp.org/ftp/Specs/archive/38_series/38.300/38300-h10.zip
https://www.3gpp.org/ftp/Specs/archive/38_series/38.331/38331-h10.zip
https://www.3gpp.org/ftp/Specs/archive/38_series/38.321/38321-h10.zip
https://www.3gpp.org/ftp/Specs/archive/38_series/38.304/38304-h10.zip

### Summary of the Invention

Among the latest 3GPP research topics, mobility management is a very important topic. In traditional cell handover, a method based on layer 3 (L3), namely a radio resource control (RRC) signaling, is adopted, that is, a terminal reports an L3 measurement result, a network selects an appropriate target cell according to the measurement result and sends an RRC signaling for indicating the handover to the target cell, and the terminal executes an RRC signaling for the handover. The execution process generally includes determining the target cell, applying a configuration of the target cell, synchronizing with the target cell, initiating random access, and sending a message of the completion of the handover. The entire handover process involves: interpretation and execution of a signaling, downlink synchronization, uplink synchronization, and completion of remaining handover steps. Generally speaking, this takes tens of milliseconds to one or two hundred milliseconds. The impact on services that are sensitive to latency requirements is relatively large. For some services, if the latency exceeds 20 milliseconds, the quality of service will be significantly reduced. In 5G, cells are getting smaller and smaller, and handover is becoming more frequent. The problem of reduction of the quality of service caused by handover latency is becoming more serious. A feasible solution is to use a measurement result of a lower layer, namely L1, and use a signaling of a lower layer, such as a physical layer or MAC layer, to indicate the handover. Combined with some pre-configured signalings and measures such as terminal pre-synchronization, latency of handover can be greatly reduced. Latency of such handover is relatively short, and when it is executed within the same gNB or within one data unit (DU), it can be further optimized to reduce the impact of handover on the services. In traditional handover, entering a target cell is similar to a new access, which may involve the reestablishment of an RLC layer and the reset of MAC layer. It may clear all HARQ buffers, initialize HARQ transmission, and interrupt some processes or MAC processes, which will also affect the continuity of data reception or transmission. Therefore, how to avoid the interruption of data transmission and reception during the handover process and ensure the continuity of communication is a problem that needs to be solved.

In response to the above problems, the present application provides a solution.

It should be noted that, in the absence of conflict, the embodiments and features in the embodiments in any node of the present application can be applied to any other node. In the absence of conflict, the embodiments and features in the embodiments of the present application can be arbitrarily combined with each other. At the same time, the method proposed in the present application can also be used to solve other problems in communication.

The present application discloses a method used in a first node for wireless communication, comprising:
receiving a first signaling; wherein the first signaling comprises a first cell identity, and the first cell identity is configured for a target special cell (SpCell); and
executing the first signaling; wherein the behavior of executing the first signaling comprises executing a target operation set,
wherein the first signaling is a signaling of a radio resource control (RRC) layer; the first signaling comprises a first field; the first field is used to configure the target SpCell, and the first field is SpCellConfig; the target operation set is related to whether the behavior of executing the first signaling depends on reception of a second signaling; the second signaling is used to indicate execution of the first signaling, and the second signaling is a control signaling of a medium access control (MAC) layer or control information of a physical layer; when the execution of the first signaling does not depend on the reception of the second signaling, the target operation set comprises a first operation set and a second operation set; when the execution of the first signaling depends on the reception of the second signaling, the target operation set comprises only the latter of the first operation set and the second operation set; the first operation set and the second operation set are both for a MAC entity corresponding to a cell group of the target SpCell; the first operation set is orthogonal to the second operation set; the first operation set comprises at least one of clearing soft buffers of all downlink hybrid automatic repeat reQuest (HARQ) processes except for those used for multicast broadcast service (MBS) broadcast, setting new data indicators of all uplink HARQ processes to 0, for each downlink HARQ process considering next received transmission for one transport block (TB) as earliest transmission, and stopping all timers in a first timer set which comprises at least one timer; and the second operation set comprises at least one of at least canceling triggered beam failure recovery (BFR), clearing a message 3 (Msg3) buffer, and clearing a message A (MSGA) buffer.

As one embodiment, the problems to be solved by the present application comprise: how to ensure the reliability of communication, how to reduce the latency of handover, how to simplify a signaling process, how to support cell handover triggered by a lower layer, how to ensure the continuity of data in the handover process, and how to fall back to an original cell to continue communication when the handover fails.

As one embodiment, the benefits of the above method comprise: more flexibility, conduciveness to reducing the latency of handover, ensured quality of service, ensured service continuity, improved reliability of handover, and avoidance of the impact of handover on data transmission.

Specifically, according to one aspect of the present application, the first operation set comprises at least one of: initializing a first parameter of each logical channel to 0, and the first parameter being used for a logical channel priority process; stopping an ongoing random access process; canceling a triggered buffer state report process; and canceling a triggered recommended bit rate query process, wherein the first operation set is irrelevant to secondary cell group (SCG) deactivation.

Specifically, according to one aspect of the present application, the second operation set comprises at least one of: discarding a contention-free random access resource indicated by an explicit signaling; canceling a triggered scheduling request process; canceling a triggered power headroom report process; considering all timeAlignmentTimer timers expired; resetting a first counter, and the first counter being used for beam failure recovery; and resetting all listen before talk counters (LBT_COUNTER), wherein the second operation set is irrelevant to SCG deactivation.

Specifically, according to one aspect of the present application, the second operation set comprises: canceling a triggered L1 measurement result report process.

Specifically, according to one aspect of the present application, the second operation set comprises: canceling a recommended cell or a recommended reference signal resource report process.

Specifically, according to one aspect of the present application, when execution of the first signaling does not depend on reception of the second signaling, execution of the first signaling comprises starting a first timer; when execution of the first signaling depends on reception of the second signaling, execution of the first signaling does not comprise starting the first timer; and expiration of the first timer is used to trigger RRC connection reestablishment, and a stopping condition of the first timer comprises successful completion of a random access process for the target SpCell.

Specifically, according to one aspect of the present application, when execution of the first signaling does not depend on reception of the second signaling, a random access process for the target SpCell is initiated accompanied by execution of the first signaling; and when execution of the first signaling depends on reception of the second signaling, a first signal is sent, and the random access process for the target SpCell is initiated accompanied by sending of the first signal,
wherein when execution of the first signaling depends on reception of the second signaling, execution of the first signaling does not accompany the random access process for the target SpCell; the first signal is sent after the first signaling and before the second signaling; and the first signal is used to report a measurement result or report a recommended target cell or a recommended reference signal resource.

Specifically, according to one aspect of the present application, in response to sending the first signal, a third timer is started; and a third signal is sent in response to expiration of the third timer, wherein the third signal is used to report a measurement result or report a recommended target cell or a recommended reference signal resource.

Specifically, according to one aspect of the present application, the second signaling is received; and in response to receiving the second signaling, a second timer is started, wherein the second timer is a MAC sublayer timer.

Specifically, according to one aspect of the present application, the first node is an Internet of Things terminal.

Specifically, according to one aspect of the present application, the first node is user equipment.

Specifically, according to one aspect of the present application, the first node is a relay.

Specifically, according to one aspect of the present application, the first node is an access network device.

Specifically, according to one aspect of the present application, the first node is a vehicle-mounted terminal.

Specifically, according to one aspect of the present application, the first node is an aircraft.

Specifically, according to one aspect of the present application, the first node is a mobile phone.

The present application discloses a first node used for wireless communication, comprising:
a first receiver, receiving a first signaling; wherein the first signaling comprises a first cell identity, and the first cell identity is configured for a target special cell (SpCell); and
the first receiver, executing the first signaling; wherein the behavior of executing the first signaling comprises executing a target operation set,
wherein the first signaling is a signaling of a radio resource control (RRC) layer; the first signaling comprises a first field; the first field is used to configure the target SpCell, and the first field is SpCellConfig; the target operation set is related to whether the behavior of executing the first signaling depends on reception of a second signaling; the second signaling is used to indicate execution of the first signaling, and the second signaling is a control signaling of a medium access control (MAC) layer or control information of a physical layer; when execution of the first signaling does not depend on reception of the second signaling, the target operation set comprises a first operation set and a second operation set; when execution of the first signaling depends on reception of the second signaling, the target operation set comprises only the latter of the first operation set and the second operation set; the first operation set and the second operation set are both for a MAC entity corresponding to a cell group of the target SpCell; the first operation set is orthogonal to the second operation set; the first operation set comprises at least one of clearing soft buffers of all downlink hybrid automatic repeat reQuest (HARQ) processes except for those used for multicast broadcast service (MBS) broadcast, setting new data indicators of all uplink HARQ processes to 0, for each downlink HARQ process considering next received transmission for one transport block (TB) as earliest transmission, and stopping all timers in a first timer set which comprises at least one timer; and the second operation set comprises at least one of at least canceling triggered beam failure recovery (BFR), clearing a message 3 (Msg3) buffer, and clearing a message A (MSGA) buffer.

As one embodiment, compared with the traditional solution, the present application has the following advantages:
supporting a fast handover process within the same data unit (DU);
reducing the latency of handover;
ensuring the continuity of data during a handover process;
minimizing the impact of handover on data transmission;
avoiding the impact of a MAC layer process or configuration of a source cell on a target cell;
repeated handover between different cells;
smoothly falling back to the previous source cell after the handover fails; and
supporting L1L2 mobility management.

### Brief Description of the Drawings

By reading the detailed description of non-limiting embodiments in the following drawings, other features, purposes and advantages of the present application will become more obvious:
Figure 1 shows a flow chart of receiving a first signaling and executing a first signaling according to one embodiment of the present application;
Figure 2 shows a schematic diagram of a network architecture according to one embodiment of the present application;
Figure 3 shows a schematic diagram of an embodiment of a wireless protocol architecture of a user plane and a control plane according to one embodiment of the present application;
Figure 4 shows a schematic diagram of a first communication device and a second communication device according to one embodiment of the present application;
Figure 5 shows a flow chart of wireless signal transmission according to one embodiment of the present application;
Figure 6 shows a schematic diagram of a signaling format according to one embodiment of the present application;
Figure 7 shows a schematic diagram of a second signaling used to indicate execution of a first signaling according to one embodiment of the present application;
Figure 8 shows a schematic diagram of a first signaling used to configure a first signal according to one embodiment of the present application;
Figure 9 shows a schematic diagram of a first signal used to report a measurement result or a recommended target cell or a recommended reference signal resource according to one embodiment of the present application;
Figure 10 illustrates a schematic diagram of a processing apparatus used in a first node according to one embodiment of the present application; and
Figure 11 illustrates a schematic diagram of a processing apparatus used in a first node according to one embodiment of the present application.

### Detailed Description of Embodiments

The technical solution of the present application will be further described in detail below in conjunction with drawings. It should be noted that, in the absence of conflict, the embodiments and features in the embodiments of the present application can be arbitrarily combined with each other.

### Embodiment 1

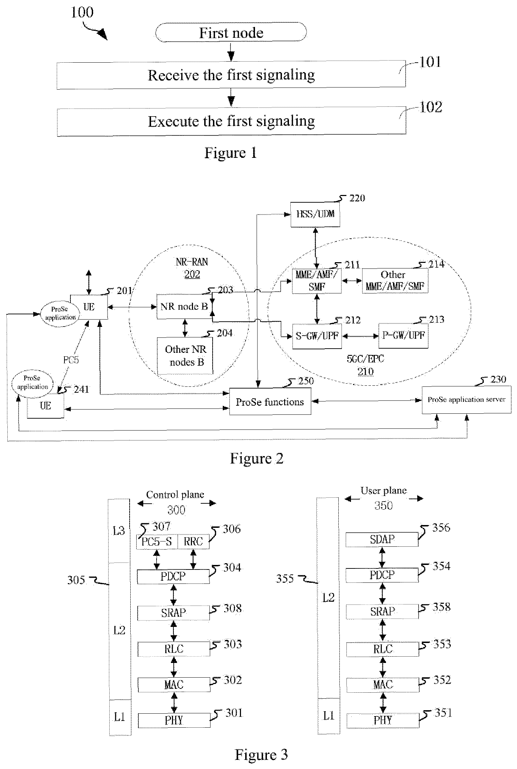

Embodiment 1 illustrates a flow chart of receiving a first signaling and executing a first signaling according to one embodiment of the present application, as shown in Figure 1. In Figure 1, each box represents a step. It is particularly important to emphasize that the order of the boxes in the figure does not represent the temporal order of the steps represented.

In Embodiment 1, a first node in the present application receives a first signaling in step 101; and executes a first signaling in step 102,
wherein, the first signaling comprises a first cell identity, and the first cell identity is configured for a target special cell (SpCell); and the behavior of executing the first signaling comprises executing a target operation set,
wherein the first signaling is a signaling of a radio resource control (RRC) layer; the first signaling comprises a first field; the first field is used to configure the target SpCell, and the first field is SpCellConfig; the target operation set is related to whether the behavior of executing the first signaling depends on reception of a second signaling; the second signaling is used to indicate execution of the first signaling, and the second signaling is a control signaling of a medium access control (MAC) layer or control information of a physical layer; when execution of the first signaling does not depend on reception of the second signaling, the target operation set comprises a first operation set and a second operation set; when execution of the first signaling depends on reception of the second signaling, the target operation set comprises only the latter of the first operation set and the second operation set; the first operation set and the second operation set are both for a MAC entity corresponding to a cell group of the target SpCell; the first operation set is orthogonal to the second operation set; the first operation set comprises at least one of clearing soft buffers of all downlink hybrid automatic repeat reQuest (HARQ) processes except for those used for multicast broadcast service (MBS) broadcast, setting new data indicators of all uplink HARQ processes to 0, for each downlink HARQ process considering next received transmission for one transport block (TB) as earliest transmission, and stopping all timers in a first timer set which comprises at least one timer; and the second operation set comprises at least one of at least canceling triggered beam failure recovery (BFR), clearing a message 3 (Msg3) buffer, and clearing a message A (MSGA) buffer.

As one embodiment, the first node is user equipment (UE).

As one embodiment, the first node is in an RRC connected state.

As one embodiment, a serving cell refers to a cell where UE resides. Executing cell search comprises UE searching for a suitable cell of a selected public land mobile network (PLMN) or stand-alone non-public network (SNPN), selecting the suitable cell to provide available services, and monitoring a control channel of the suitable cell. This process is defined as residing on a cell; that is, a cell that is resided on is a serving cell of this UE relative to this UE. Residing on a cell in an RRC idle state or an RRC inactive state has the following benefits: it allows UE to receive system messages from the PLMN or SNPN; after registration, if UE desires to establish an RRC connection or continue one suspended RRC connection, UE may do so by performing initial access on the control channel of the cell where it resides; the network may page UE; and it allows UE to receive notifications from an earthquake and tsunami warning system (ETWS) and a commercial mobile alert system (CMAS).

As one embodiment, for UE in an RRC connected state without being configured with carrier aggregation/dual connectivity (CA/DC), there is only one serving cell comprising a primary cell. For UE in an RRC connected state configured with carrier aggregation/dual connectivity (CA/DC), the serving cell is used to indicate a cell set comprising a special cell (SpCell) and all secondary cells. A primary cell is a master cell group (MCG) cell, which operates on a primary frequency. UE executes an initial connection establishment process or initiates connection reestablishment on the primary cell. For a dual connectivity operation, a special cell refers to a primary cell (PCell) of an MCG or a primary secondary cell group (SCG) cell (PSCell) of an SCG; and if it is not a dual connectivity operation, a special cell refers to a PCell.

As one embodiment, a frequency at which a secondary cell (SCell) operates is a secondary frequency.

As one embodiment, individual content of an information element is called a field.

As one embodiment, multi-radio dual connectivity (MR-DC) refers to dual connectivity of E-UTRA and NR nodes, or dual connectivity between two NR nodes.

As one embodiment, in MR-DC, a wireless access node that provides a control plane connection to a core network is a master node, and the master node may be a master eNB, a master ng-eNB, or a master gNB.

As one embodiment, an MCG refers to a group of serving cells associated with a master node in MR-DC, comprising a SpCell, and may also, optionally, comprise one or more SCells.

As one embodiment, a PCell is an SpCell of an MCG.

As one embodiment, a PSCell is an SpCell of an SCG.

As one embodiment, in MR-DC, a wireless access node that does not provide a control plane connection to a core network and provides additional resources to UE is a secondary node. The secondary node may be an en-gNB, a secondary ng-eNB, or a secondary gNB.

As one embodiment, in MR-DC, a group of serving cells associated with a secondary node is a secondary cell group (SCG), comprising an SpCell and, optionally, one or more SCells.

As one embodiment, the first signaling is an RRC message.

As one embodiment, the first signaling is or comprises at least part of fields of one RRC message.

As one embodiment, the first signaling is or comprises one field of one RRC message.

As one embodiment, content comprised in one field of the present application is one information element, and the meaning of comprising one field is comprising the one information element.

As one embodiment, content comprised in one field of the present application is a plurality of information elements, and the meaning of comprising one field is comprising the plurality of information elements.

As one embodiment, the first signaling is an RRCReconfiguration message.

As one embodiment, the first signaling comprises part of fields in an RRCReconfiguration message.

As one embodiment, the first signaling comprises only part of fields in an RRCReconfiguration message.

As one embodiment, each RRCReconfiguration comprises at least one Cell GroupConfig.

As one embodiment, the first signaling is or comprises a CellGroupConfig field or a corresponding information element.

As one embodiment, the first signaling is CellGroupConfig for a cell group of the target SpCell.

As one embodiment, each CellGroupConfig comprises at least one SpCellConfig.

As one embodiment, the first signaling comprises one or more CellGroupConfig fields in an RRCReconfiguration message.

As one embodiment, the first signaling is or comprises a SpCellConfig field or a corresponding information element.

As one embodiment, the first signaling is SpCellConfig for the target SpCell.

As one embodiment, the first signaling comprises one or more SpCellConfig fields in an RRCReconfiguration message.

As one embodiment, the first signaling comprises one or more SpCellConfig fields in a CellGroupConfig field.

As one embodiment, when execution of the first signaling does not depend on reception of the second signaling, the first signaling is an RRCReconfiguration message.

As one embodiment, when execution of the first signaling does not depend on reception of the second signaling, the first signaling comprises only one SpCellConfig.

As one embodiment, when execution of the first signaling depends on reception of the second signaling, the first signaling may comprise a plurality of CellGroupConfig fields and each CellGroupConfig field is used to configure an MCG.

As one embodiment, when execution of the first signaling depends on reception of the second signaling, the first signaling may comprise a plurality of SpCellConfig, each of which is used to configure a PCell.

As one embodiment, the first signaling is sent to the first node by unicast.

As one embodiment, a logical channel occupied by the first signaling comprises a downlink control channel (DCCH).

As one embodiment, the SpCell comprises at least one of a PCell and a PSCell.

As one embodiment, the SpCell is a PCell.

As one embodiment, the SpCell is a PSCell.

As one embodiment, the target SpCell specifically refers to a target cell in cell handover.

As one embodiment, the first cell identity is a physical cell identity (PCI).

As one embodiment, a physCellId field in the first signaling indicates the first cell identity.

As one embodiment, the meaning of phrase "the first cell identity is configured for a target SpCell" comprises: the target SpCell is a cell indicated by the first cell identity searched on a specific time-frequency resource.

As one embodiment, the meaning of phrase "the first cell identity is configured for a target SpCell" comprises: when the first signaling indicates downlink frequency information, the target SpCell is a cell indicated by the first cell identity on a synchronization signal block (SSB) frequency indicated by the downlink frequency information.

As one embodiment, the meaning of phrase "the first cell identity is configured for a target SpCell" comprises: when the first signaling does not indicate downlink frequency information, the target SpCell is a cell indicated by the first cell identity on a synchronization signal block (SSB) frequency of a source cell of the first node.

As one embodiment, the target SpCell corresponds to a source cell or a source SpCell.

As one embodiment, the source cell or the source SpCell is a cell where the first node receives the first signaling.

As one embodiment, the source cell or the source SpCell is a cell before handover of the first node.

As one embodiment, the first cell identity is or comprises a cell index.

As one embodiment, the first cell identity is or comprises an NR cell global identity (NCGI).

As one embodiment, after execution of the first signaling is completed, the target SpCell becomes an SpCell of the first node.

As one embodiment, when execution of the first signaling does not depend on reception of the second signaling, the first signaling is executed immediately after being received.

As one embodiment, when execution of the first signaling does not depend on reception of the second signaling, the first signaling is executed after the first signaling is received and a measurement event associated with the first signaling is satisfied.

As one embodiment, the sentence "execution of the first signaling does not depend on reception of the second signaling" means: whether the second signaling is received does not affect execution of the first signaling.

As one embodiment, the sentence "execution of the first signaling does not depend on reception of the second signaling" means: the first signaling can be executed even if the second signaling is not received.

As one embodiment, the sentence "execution of the first signaling depends on reception of the second signaling" means: the first signaling can be executed only after the second signaling is received.

As one embodiment, the sentence "execution of the first signaling depends on reception of the second signaling" means: the first signaling will not be executed if the second signaling is not received.

As one embodiment, the sentence "execution of the first signaling depends on reception of the second signaling" means: the first signaling is first saved after being received, and the first signaling can be executed only after the second signaling is received.

As one embodiment, the phrase "the first signaling is a signaling of an RRC layer" means: the first signaling is generated at an RRC layer.

As one embodiment, the phrase "the first signaling is a signaling of an RRC layer" means: the first signaling is one RRC signaling.

As one embodiment, the phrase "the first signaling is a signaling of an RRC layer" means: the first signaling is one or more fields in one RRC signaling.

As one embodiment, the phrase "the first signaling is a signaling of an RRC layer" means: the first signaling is one or more RRC information elements.

As one embodiment, the first signaling comprises at least the first field.

As one embodiment, the first field of the first signaling configures a cell identity of the target SpCell.

As one embodiment, the first field of the first signaling comprises the first cell identity.

As one embodiment, the first field of the first signaling configures downlink frequency information of the target SpCell.

As one embodiment, the first field of the first signaling configures uplink access information of the target SpCell.

As one embodiment, the first field of the first signaling configures uplink resources of the target SpCell.

As one embodiment, the first field of the first signaling configures a bandwidth part (BWP) of the target SpCell.

As one embodiment, the first field of the first signaling configures power of the target SpCell.

As one embodiment, the first field of the first signaling configures timing advance of the target SpCell.

As one embodiment, the first field of the first signaling configures a reference signal of the target SpCell.

As one embodiment, the first field of the first signaling configures a control channel of the target SpCell.

As one embodiment, the first field of the first signaling configures spatial parameters of the target SpCell.

As one embodiment, the second signaling is a MAC control element (CE).

As one embodiment, the second signaling is downlink control information (DCI).

As one embodiment, the second signaling is a signaling below an RRC layer.

As one embodiment, the second signaling is a signaling of MAC layer or a physical layer.

As one embodiment, the second signaling explicitly indicates whether to execute the first signaling.

As one embodiment, the second signaling comprises one configuration identity or configuration index of the first signaling.

As one embodiment, when the second signaling comprises one configuration identity or configuration index of the first signaling, execution of the first signaling is triggered.

As one embodiment, the second signaling indicates the target SpCell.

As one embodiment, when the second signaling indicates the target SpCell, the first signaling is executed.

As one embodiment, the second signaling indicates resources or reference signals of the target SpCell.

As one embodiment, when the second signaling indicates resources or reference signals of the target SpCell, execution of the first signaling is triggered.

As one embodiment, before receiving the second signaling, the first node sends a first signal.

As one embodiment, the first signal is sent after receiving the first signaling.

As one embodiment, the second signaling is received after sending the first signal.

As one embodiment, the first signal is used to trigger the second signaling.

As one embodiment, the first signal comprises a measurement result.

As one embodiment, the first signal comprises an L1 measurement result.

As one embodiment, the first signal comprises L1-RSRP.

As one embodiment, the first signal comprises one identity or index.

As one sub-embodiment of this embodiment, the one identity or index is associated with the first signaling.

As one sub-embodiment of this embodiment, the one identity or index is associated with the target SpCell.

As one embodiment, the second signaling comprises the one identity or index indicated by the first signal.

As one embodiment, when the second signaling comprises the one identity or index indicated by the first signal, execution of the first signaling associated with the one identity or index is triggered.

As one embodiment, the meaning of sentence "the second signaling is used to indicate execution of the first signaling" comprises: the second signaling triggers execution of the first signaling.

As one embodiment, when execution of the first signaling does not depend on reception of the second signaling, execution of the first signaling comprises initiating random access to the target SpCell.

As one embodiment, when execution of the first signaling does not depend on reception of the second signaling, execution of the first signaling triggers the initiation of random access to the target SpCell.

As one embodiment, when execution of the first signaling does not depend on reception of the second signaling, accompanied by execution of the first signaling, the first node initiates random access to the target SpCell.

As one embodiment, when execution of the first signaling depends on a second signaling, the first field of the first signaling uses a first format, and the first format does not comprise a second field; when execution of the first signaling does not depend on a second signaling, the first field of the first signaling uses a second format, and the first format comprises a second field; the second format does not comprise a second field; and the second field is reconfiguration WithSync.

As one embodiment, when execution of the first signaling depends on a second signaling, the first signaling does not comprise reconfiguration With Sync; and when execution of the first signaling does not depend on a second signaling, the first signaling comprises reconfiguration WithSync.

As one embodiment, when execution of the first signaling depends on a second signaling, spcellConfig comprised in the first signaling does not comprise reconfigurationWithSync.

As one embodiment, the first format comprises a third field, and the second format does not comprise a third field.

As one embodiment, the third field is reconfigurationWithoutSync.

As one embodiment, execution of the third field does not comprise synchronization with the target SpCell.

As one embodiment, execution of the third field does not comprise resetting MAC.

As one embodiment, execution of the third field comprises applying broadcast control channel (BCCH) configuration.

As one embodiment, execution of the third field comprises determining the target SpCell.

As one embodiment, the first field comprised in the first signaling comprises a second field, and the second field is reconfiguration WithSync.

As one embodiment, the meaning of sentence "the behavior of executing the first signaling comprises executing a target operation set" comprises: execution of the first field of the first signaling comprises the target operation set.

As one embodiment, the meaning of sentence "the behavior of executing the first signaling comprises executing a target operation set" comprises: execution of the second field comprised in the first field of the first signaling comprises the target operation set.

As one embodiment, execution of the third field comprises using a new C-RNTI.

As one embodiment, the new C-RNTI is an identity indicated by a newUE-Identity field.

As one embodiment, execution of the third field comprises configuring a lower layer according to received spCellConfigCommon.

As one embodiment, execution of the third field does not comprise starting the first timer.

As one embodiment, execution of the second field comprises starting the first timer.

As one embodiment, execution of the second field comprises synchronization with the target SpCell.

As one embodiment, execution of the second field comprises applying BCCH configuration.

As one embodiment, execution of the second field comprises determining the target SpCell.

As one embodiment, execution of the second field comprises applying a new C-RNTI.

As one embodiment, execution of the second field comprises configuring a lower layer according to received spCellConfigCommon.

As one embodiment, a cell group to which the target SpCell belongs is an MCG.

As one embodiment, a cell group to which the target SpCell belongs is an SCG.

As one embodiment, the first signaling explicitly indicates whether to execute the resetting of MAC of a cell group of the target SpCell.

As one embodiment, when execution of the first signaling does not depend on reception of a second signaling, the behavior of executing the first signaling comprises resetting MAC of a cell group of the target SpCell.

As one embodiment, the meaning of sentence "when execution of the first signaling depends on reception of a second signaling, the behavior of executing the first signaling does not comprise starting a first timer" is established only when execution of the first signaling does not trigger a random access process.

As one embodiment, when execution of the first signaling does not depend on reception of a second signaling, execution of the first signaling triggers a random access process.

As one embodiment, when execution of the first signaling does not depend on reception of a second signaling, a random access process is accompanied by execution of the first signaling.

As one embodiment, when execution of the first signaling does not depend on reception of a second signaling, execution of the first signaling involves a random access process.

As one embodiment, when execution of the first signaling does not depend on reception of a second signaling, execution of the first signaling comprises a random access process.

As one embodiment, when execution of the first signaling does not trigger a random access process, and execution of the first signaling depends on reception of a second signaling, the behavior of executing the first signaling does not comprise starting a first timer.

As one embodiment, when execution of the first signaling triggers or involves or accompanies a random access process, and execution of the first signaling depends on reception of a second signaling, the behavior of executing the first signaling comprises starting a first timer.

As one embodiment, when execution of the first signaling depends on reception of a second signaling, execution of the first signaling does not trigger a random access process.

As one embodiment, when execution of the first signaling depends on reception of a second signaling, execution of the first signaling does not involve a random access process.

As one embodiment, when execution of the first signaling depends on reception of a second signaling, execution of the first signaling does not accompany a random access process.

As one embodiment, when execution of the first signaling depends on reception of a second signaling, execution of the first signaling does not comprise a random access process.

As one embodiment, when the first signaling is executed, whether a random access process is triggered, or involved or accompanied, is used to determine whether to start a first timer.

As one embodiment, when the first signaling is executed, a random access process is triggered, or involved or accompanied, and execution of the first signaling comprises starting a first timer.

As one embodiment, when the first signaling is executed, a random access process is not triggered, involved or accompanied, and execution of the first signaling does not comprise starting a first timer.

As one embodiment, when execution of the first signaling does not depend on reception of a second signaling, a random access process follows execution of the first signaling.

As one embodiment, when execution of the first signaling depends on reception of a second signaling, a random access process does not follow execution of the first signaling.

As one embodiment, when execution of the first signaling does not depend on reception of the second signaling, execution of the first signaling comprises starting a first timer; when execution of the first signaling depends on reception of the second signaling, execution of the first signaling does not comprise starting a first timer; and expiration of the first timer is used to trigger RRC connection reestablishment, and a stopping condition of the first timer comprises successful completion of a random access process for the target SpCell.

As one embodiment, when execution of the first signaling comprises starting the first timer, execution of the first signaling must trigger the start of the first timer.

As one embodiment, when execution of the first signaling comprises starting the first timer, execution of the first signaling does not trigger the start of the first timer.

As one embodiment, the first timer is related to cell handover.

As one embodiment, the first timer is related to reconfigurationWithSync.

As one embodiment, the first timer is a T304 timer.

As one embodiment, the first timer is a T304a timer.

As one embodiment, the sentence "when execution of the first signaling depends on reception of a second signaling, the behavior of executing the first signaling does not comprise starting a first timer" is established only when the first signaling does not comprise configuration of the first timer; and when execution of the first signaling does not depend on reception of a second signaling, the first signaling configures the first timer.

As one embodiment, the meaning of phrase "the first signaling configures the first timer" comprises that the first signaling configures a length or expiration value of the first timer.

As one embodiment, if the first signaling comprises configuration of the first timer, when execution of the first signaling depends on reception of a second signaling, the behavior of executing the first signaling comprises starting a first timer.

As one embodiment, when execution of the first signaling depends on reception of a second signaling, the first signaling does not comprise configuration of the first timer.

As one embodiment, when execution of the first signaling depends on reception of a second signaling, the first signaling is not used to configure the first timer.

As one embodiment, the meaning of sentence "the behavior of executing the first signaling does not comprise starting the first timer" comprises: the cell handover process implemented by the first signaling does not involve starting the first timer.

As one embodiment, the RRC connection reestablishment comprises sending an RRCReestablishmentRequest message.

As one embodiment, the RRC connection reestablishment comprises suspending an SRB1.

As one embodiment, the RRC connection reestablishment comprises suspending an SRB0 and all RBs other than an MBS radio bearer (MRB) for broadcast.

As one embodiment, the RRC connection reestablishment comprises suspending a current service.

As one embodiment, the RRC connection reestablishment comprises releasing an SCG or an SCell.

As one embodiment, the RRC connection reestablishment comprises resetting MAC.

As one embodiment, the RRC connection reestablishment comprises starting a T311 timer.

As one embodiment, the RRC connection reestablishment comprises releasing spCellConfig.

As one embodiment, the RRC connection reestablishment comprises releasing or deleting the first signaling.

As one embodiment, the RRC connection reestablishment comprises cell selection.

As one embodiment, when execution of the first signaling depends on reception of a second signaling, execution of the second field comprised in the first signaling does not comprise synchronization with the target SpCell; and when execution of the first signaling does not depend on reception of a second signaling, execution of the second field comprised in the first signaling comprises synchronization with the target SpCell.

As one embodiment, when execution of the first signaling depends on reception of a second signaling, a process of synchronization with the target SpCell is executed before executing the first signaling.

As one embodiment, when execution of the first signaling depends on reception of a second signaling, the first node and the target SpCell are already synchronized when the first signaling is executed.

As one embodiment, when execution of the first signaling depends on reception of a second signaling, execution of the second field comprised in the first signaling comprises fast synchronization with the target SpCell; and when execution of the first signaling does not depend on reception of a second signaling, execution of the second field comprised in the first signaling comprises synchronization with the target SpCell.

As one embodiment of this embodiment, the fast synchronization is different from the synchronization.

As one embodiment of this embodiment, the fast synchronization comprises pre-synchronization.

As one embodiment of this embodiment, the fast synchronization is based on the first node having obtained timing for the target SpCell.

As one embodiment, the first operation set comprises at least one operation.

As one embodiment, the second operation set comprises at least one operation.

As one embodiment, the meaning of sentence "the first operation set and the second operation set are both for the MAC entity corresponding to a cell group of the target SpCell" comprises: each operation in the first operation set is an operation of MAC corresponding to a cell group of the target SpCell; and each operation in the second operation set is an operation of MAC corresponding to a cell group of the target SpCell.

As one embodiment, an MBS comprises broadcast and multicast services, an MBS for broadcast is a broadcast service, and an MBS for multicast is a multicast service.

As one embodiment, a broadcast MBS and a multicast MBS are different in configuration mode, and in bearer used.

As one embodiment, a multicast MBS may use point to point (PTP) and point to multipoint (PTM) transmission, and a broadcast MBS can only use PTM.

As one embodiment, a multicast MBS supports HARQ feedback, and a broadcast MBS does not support HARQ feedback.

As one embodiment, a multicast MBS supports HARQ-ACK feedback, and a broadcast MBS does not support HARQ-ACK feedback.

As one embodiment, a piece of UE may receive a broadcast MBS in any RRC state, but can only receive a multicast MBS in an RRC connected state and an RRC inactive state.

As one embodiment, the meaning of "clearing soft buffers of all HARQ processes except for those used for multicast broadcast service (MBS) broadcast" comprises: clearing soft buffers of all downlink HARQ processes except for those used for multicast broadcast service (MBS) broadcast.

As one embodiment, the meaning of "clearing soft buffers of all HARQ processes except for those used for multicast broadcast service (MBS) broadcast" comprises: soft buffers of downlink HARQ processes used for the MBS broadcast may not be cleared.

As one embodiment, the meaning of "clearing soft buffers of all HARQ processes except for those used for multicast broadcast service (MBS) broadcast" comprises: clearing soft buffers of all downlink HARQ processes used for DRB transmission.

As one embodiment, the meaning of "clearing soft buffers of all HARQ processes except for those used for multicast broadcast service (MBS) broadcast" comprises: clearing soft buffers of all downlink HARQ processes used for SRB transmission.

As one embodiment, data in soft buffers are used for soft merging of different transmissions of the same HARQ process.

As one embodiment, the meaning of "setting new data indicators (NDIs) of all uplink HARQ processes to 0" comprises: each uplink HARQ process has or is associated with an NDI, and the NDI occupies 1 bit.

As one embodiment, the meaning of "setting new data indicators (NDIs) of all uplink HARQ processes to 0" comprises: an initial value of an NDI is 0.

As one embodiment, the meaning of "setting new data indicators (NDIs) of all uplink HARQ processes to 0" comprises: setting an NDI of each uplink HARQ process to an initial value.

As one embodiment, the meaning of "setting new data indicators (NDIs) of all uplink HARQ processes to 0" comprises: an NDI of one uplink HARQ process is toggled to indicate one new transmission.

As one embodiment, the meaning of "setting new data indicators (NDIs) of all uplink HARQ processes to 0" comprises: an NDI of one uplink HARQ process is not toggled relative to an NDI of the most recent transmission of the one HARQ process so as to indicate retransmission.

As one embodiment, the meaning of "setting new data indicators (NDIs) of all uplink HARQ processes to 0" comprises: each uplink HARQ process is identified by one HARQ process number.

As one embodiment, a serving cell allocates resources for the one uplink HARQ process by indicating one uplink HARQ process number.

As one embodiment, a serving cell allocates resources for initial transmission or retransmission of the one uplink HARQ process by indicating one uplink HARQ process number and an NDI of the one uplink HARQ process.

As one embodiment, a serving cell indicates an uplink HARQ process number and an NDI through a DCI format 0_0 or 0_1.

As one embodiment, at a physical layer, TB is a transmission unit.

As one embodiment, at a physical layer, TB corresponds to one transmission of a transmission channel.

As one embodiment, the meaning of "for each downlink HARQ process considering next received transmission for one TB as earliest transmission" comprises: for each downlink HARQ process, it is considered that the next received transmission for one TB is an initial transmission.

As one embodiment, the meaning of "for each downlink HARQ process considering next received transmission for one TB as earliest transmission" comprises: for each downlink HARQ process, it is considered that the next received transmission for one TB is an initial transmission, regardless of whether an NDI is toggled.

As one embodiment, the meaning of "for each downlink HARQ process considering next received transmission for one TB as earliest transmission" comprises: each downlink HARQ process is placed in an initial state.

As one embodiment, the first timer set comprises only timers other than MBS broadcast discontinuous reception (DRX) timers.

As one embodiment, the first timer set comprises all timers other than MBS broadcast discontinuous reception (DRX) timers.

As one embodiment, the meaning of phrase "stopping all timers in a first timer set" comprises: timers other than the first timer set may not be stopped.

As one embodiment, the meaning of phrase "stopping all timers in a first timer set" comprises: timers for MBS broadcast DRX may not be stopped.

As one embodiment, timers for MBS broadcast DRX comprise: drx-onDurationTimerPTM and drx-InactivityTimerPTM for MBS broadcast.

As one embodiment, any one timer in the first timer set is a timer of MAC layer.

As one embodiment, the first timer set comprises: drx-onDurationTimer, drx-InactivityTimer, drx-RetransmissionTimerDL, drx-RetransmissionTimerUL, drx-HARQ-RTT-TimerDL, drx-HARQ-RTT-TimerUL, drx-RetransmissionTimerSL, drx-HARQ-RTT-TimerSL, and drx-ShortCycleTimer.

As one embodiment, the first timer set comprises: drx-onDurationTimerPTM, drx-InactivityTimerPTM, drx-RetransmissionTimerDL-PTM, and drx-HARQ-RTT-TimerDL-PTM for MBS multicast.

As one embodiment, the first timer set comprises: msgB-ResponseWindow, and ra-ContentionResolutionTimer.

As one embodiment, the first timer set comprises: cg-RetransmissionTimer.

As one embodiment, the first timer set comprises: configuredGrantTimer.

As one embodiment, the first timer set comprises: sr-ProhibitTimer.

As one embodiment, the first timer set comprises: logicalChannelSR-DelayTimer.

As one embodiment, the first timer set comprises: bwp-InactivityTimer.

As one embodiment, the first timer set comprises: sCellDeactivationTimer.

As one embodiment, the first timer set comprises: beamFailureRecovery Timer.

As one embodiment, the first timer set comprises: dataInactivityTimer.

As one embodiment, the first timer set comprises: lbt-FailureDetectionTimer.

As one embodiment, the first timer set comprises: retxBSR-Timer.

As one embodiment, the first timer set comprises: mpe-ProhibitTimer.

As one embodiment, the first timer set comprises: phr-PeriodicTimer.

As one embodiment, the first operation set comprises at least clearing soft buffers of all downlink HARQ processes except for those used for multicast broadcast service (MBS) broadcast.

As one embodiment, the meaning of sentence "the first operation set comprises at least one of: clearing soft buffers of all downlink hybrid automatic repeat reQuest (HARQ) processes except for those used for multicast broadcast service (MBS) broadcast, setting new data indicators of all uplink HARQ processes to 0, for each downlink HARQ process considering next received transmission for one transport block (TB) as earliest transmission, and stopping all timers in a first timer set which comprises at least one timer" comprises: the first operation set comprises clearing soft buffers of all downlink HARQ processes except for those used for MBS broadcast, and the first operation set comprises at least one of: setting new data indicators of all uplink HARQ processes to 0, for each downlink HARQ process considering the next received transmission for one TB as earliest transmission, and stopping all timers in a first timer set.

As one embodiment, the first operation set comprises clearing the soft buffers of all the downlink HARQ processes except for those used for MBS broadcast, setting new data indicators of all uplink HARQ processes to 0, for each downlink HARQ process considering the next received transmission for one TB as earliest transmission, and stopping all timers in a first timer set which comprises at least one timer.

As one embodiment, the first operation set comprises at least setting new data indicators of all uplink HARQ processes to 0.

As one embodiment, the first operation set comprises at least clearing all uplink HARQ buffers.

As one embodiment, the first operation set comprises at least stopping each timer in the first timer set.

As one embodiment, the meaning of phrase "stopping all timers in a first timer set" comprises: a first timer is any one timer in the first timer set, and the first timer is stopped or restarted.

As one embodiment, the first operation set comprises: initializing a first parameter of each logical channel to 0, wherein the first parameter is used for logical channel priority process.

As one sub-embodiment of this embodiment, each logical channel is associated with a copy or instance of a first parameter.

As one sub-embodiment of this embodiment, a name of the first parameter is Bj.

As one embodiment, the first operation set comprises: stopping an ongoing random access process.

As one embodiment, the first operation set comprises: canceling the triggered buffer state report process.

As one embodiment, the first operation set comprises: canceling a triggered recommended bit rate query process.

As one embodiment, the first operation set is irrelevant to secondary cell group (SCG) deactivation.

As one embodiment, the meaning of sentence "the first operation set is irrelevant to secondary cell group (SCG) deactivation" comprises: the first operation set is not for MAC corresponding to an SCG of the first node.

As one embodiment, the meaning of sentence "the first operation set is irrelevant to secondary cell group (SCG) deactivation" comprises: an SCG of the first node is not deactivated.

As one embodiment, the meaning of sentence "the first operation set is irrelevant to secondary cell group (SCG) deactivation" comprises: the first operation set is not executed due to the deactivation of an SCG of the first node.

As one embodiment, the meaning of sentence "the first operation set is irrelevant to secondary cell group (SCG) deactivation" comprises: the higher layer does not indicate SCG deactivation.

As one embodiment, the second operation set comprises at least canceling triggered beam failure recovery (BFR).

As one embodiment, the triggered BFR is one process for beam failure recovery.

As one embodiment, the triggered BFR comprises sending a MAC CE for beam failure recovery.

As one embodiment, the triggered BFR is for a source cell.

As one embodiment, the triggered BFR is for a reference signal resource of a source cell.

As one embodiment, the triggered BFR is for cells other than the target SpCell.

As one embodiment, the triggered BFR is for reference signal resources of cells other than the target SpCell.

As one embodiment, a reference signal resource on which the triggered BFR is based is associated with cells other than the target SpCell.

As one embodiment, a reference signal resource recommended by the triggered BFR is associated with cells other than the target SpCell.

As one embodiment, the second operation set comprises at least stopping an ongoing random access process.

As one embodiment, the second operation set comprises at least stopping an ongoing 4-step or 2-step random access process.

As one embodiment, the second operation set comprises at least clearing Message 3 (Msg3) buffers.

As one embodiment, in 4-step random access, an Msg3 is a third message. In 4-step random access, a first message is a preamble, a second message is feedback from a network, such as a random access response (RAR) message, and a fourth message is used for contention resolution.

As one embodiment, in 4-step random access, an Msg3 is used to carry MAC CEs and/or RRC messages.

As one embodiment, an Msg3 is an uplink message.

As one embodiment, the second operation set comprises at least clearing Message A (MSGA) buffers.

As one embodiment, in 2-step random access, an MSGA is a first message. In 2-step random access, a first message is an MSGA, and a second message is an MSGB.

As one embodiment, an MSGB is feedback to an MSGA.

As one embodiment, in 2-step random access, an MSGA is used to carry a preamble and a physical uplink shared channel (PUSCH) load.

As one sub-embodiment of this embodiment, the PUSCH load comprises an RRC message.

As one sub-embodiment of this embodiment, the PUSCH load comprises data.

As one sub-embodiment of this embodiment, the PUSCH load comprises a MAC CE.

As one embodiment, the MSGA occupies uplink resources.

As one embodiment, the second operation set comprises: discarding contention-free random access resources indicated by an explicit signaling.

As one embodiment, the meaning of phrase "discarding contention-free random access resources indicated by an explicit signaling" comprises: discarding contention-free random access resources indicated by an RRC signaling.

As one embodiment, the contention-free random access resources comprise preamble resources.

As one embodiment, the contention-free random access resources comprise physical random access channel (PRACH) resources.

As one embodiment, the second operation set comprises: canceling a triggered scheduling request process.

As one embodiment, when uplink resources are insufficient to send data, a MAC layer of the first node triggers a scheduling request.

As one embodiment, the scheduling request uses physical uplink control channel (PUCCH) resources of a source cell.

As one embodiment, the second operation set comprises: canceling a triggered power headroom report (PHR) process.

As one embodiment, the PHR process is for a source cell.

As one embodiment, a source cell of the first node is a cell that sends the first signaling.

As one embodiment, a source cell of the first node is a cell that sends the second signaling.

As one embodiment, a source cell of the first node is an SpCell before handover.

As one embodiment, the power headroom refers to a headroom of transmitting power of the first node.

As one embodiment, the second operation set comprises: all timeAlignmentTimer timers are considered expired.

As one embodiment, the timeAlignmentTimer timers are used for synchronization.

As one embodiment, when timeAlignmentTimer timers expire, the first node considers that it has lost synchronization with a network and needs to be resynchronized.

As one embodiment, there are timeAlignmentTimer timers for different cells or cell groups.

As one embodiment, resynchronization comprises initiating random access or receiving a timing advance instruction.

As one embodiment, the second operation set comprises: resetting a first counter, wherein the first counter is used for beam failure recovery.

As one embodiment, the first counter is BFI_COUNTER.

As one embodiment, the first counter is used to record a beam failure indication reported by a physical layer.

As one embodiment, if a beam failure indication reported by a physical layer exceeds a given threshold within a given time, beam failure is considered.

As one embodiment, resetting a BFI_COUNTER comprises setting BFI_COUNTER to 0.

As one embodiment, the second operation set comprises: resetting all listen before talk counters (LBT_COUNTERs).

As one embodiment, the LBT_COUNTER is used for unlicensed spectrum communication.

As one embodiment, the LBT_COUNTER is used to trigger LBT failure.

As one embodiment, resetting a LBT_COUNTER comprises setting a LBT_COUNTER to 0.

As one embodiment, the second operation set is irrelevant to SCG deactivation.

As one embodiment, the meaning of sentence "the second operation set is irrelevant to secondary cell group (SCG) deactivation" comprises: the second operation set is not for MAC corresponding to an SCG of the first node.

As one embodiment, the meaning of sentence "the second operation set is irrelevant to secondary cell group (SCG) deactivation" comprises: an SCG of the first node is not deactivated.

As one embodiment, the meaning of sentence "the second operation set is irrelevant to secondary cell group (SCG) deactivation" comprises: the second operation set is not executed due to the deactivation of an SCG of the first node.

As one embodiment, the meaning of sentence "the second operation set is irrelevant to secondary cell group (SCG) deactivation" comprises: the higher layer does not indicate SCG deactivation.

As one embodiment, the first operation set comprises: canceling a triggered scheduling request process; and the second operation set does not comprise: canceling a triggered scheduling request process.

As one embodiment, the second operation set comprises sending a scheduling request using a scheduling request configuration indicated by the first signaling.

As one embodiment, the second operation set comprises stopping timers in a second timer set, the second timer set comprises at least one timer, and the second timer set is orthogonal to the first timer set.

As one embodiment, the second timer set comprises: cg-RetransmissionTimer.

As one sub-embodiment of this embodiment, the first timer set does not comprise a cg-RetransmissionTimer timer.

As one embodiment, the second timer set comprises: configuredGrantTimer.

As one sub-embodiment of this embodiment, the first timer set does not comprise configuredGrantTimer.

As one embodiment, the second timer set comprises: sr-ProhibitTimer.

As one sub-embodiment of this embodiment, the first timer set does not comprise sr-ProhibitTimer.

As one embodiment, the second timer set comprises: logicalChannelSR-DelayTimer.

As one sub-embodiment of this embodiment, the first timer set does not comprise logicalChannelSR-DelayTimer.

As one embodiment, the second timer set comprises: bwp-InactivityTimer.

As one sub-embodiment of this embodiment, the first timer set does not comprise bwp-InactivityTimer.

As one embodiment, the second timer set comprises: sCellDeactivationTimer.

As one sub-embodiment of this embodiment, the first timer set does not comprise sCellDeactivationTimer.

As one embodiment, the second timer set comprises: beamFailureRecovery Timer.

As one sub-embodiment of this embodiment, the first timer set does not comprise beamFailureRecoveryTimer.

As one embodiment, the second timer set comprises: dataInactivityTimer.

As one sub-embodiment of this embodiment, the first timer set does not comprise dataInactivityTimer.

As one embodiment, the second timer set comprises: lbt-FailureDetectionTimer.

As one sub-embodiment of this embodiment, the first timer set does not comprise lbt-FailureDetectionTimer.

As one embodiment, the second timer set comprises: retxBSR-Timer.

As one sub-embodiment of this embodiment, the first timer set does not comprise retxBSR-Timer.

As one embodiment, the second timer set comprises: mpe-ProhibitTimer.

As one sub-embodiment of this embodiment, the first timer set does not comprise mpe-ProhibitTimer.

As one embodiment, the second timer set comprises: phr-PeriodicTimer.

As one sub-embodiment of this embodiment, the first timer set does not comprise phr-PeriodicTimer.

As one embodiment, the first timer set comprises at least one timer that does not belong to the second timer set.

As one embodiment, the second timer set comprises only a part of timers in the first timer set.

As one embodiment, the second operation set comprises: canceling a triggered L1 measurement result report process.

As one embodiment, when execution of the first signaling depends on reception of the second signaling, the behavior of executing the first signaling comprises canceling a triggered L1 measurement result report process.

As one embodiment, the L1 measurement result report process is used to send a first signal.

As one sub-embodiment of this embodiment, the first signal is used to carry an L1 measurement result report.

As one embodiment, the second operation set comprises: canceling a triggered recommended cell or a recommended reference signal resource report process.

As one embodiment, when execution of the first signaling depends on reception of the second signaling, the behavior of executing the first signaling comprises canceling a triggered recommended cell or a recommended reference signal resource report process.

As one sub-embodiment of this embodiment, the first signal is used to carry a recommended cell or a recommended reference signal resource.

As one embodiment, the second operation set comprises: canceling a triggered L1L2 mobility-related information process.

As one sub-embodiment of this embodiment, the first signal is used to carry L1L2 mobility-related information.

As one embodiment, the first signaling indicates a condition for triggering the L1 measurement result report process.

As one embodiment, the first signaling indicates a condition for triggering a recommended cell or a recommended reference signal resource report process.

As one embodiment, the first signaling indicates a condition for triggering L1L2 mobility-related information.

As one embodiment, the second signaling comprises a first identifier, and the first identifier is used to determine a version of the second signaling or whether it is modified.

As one embodiment, the first identifier is ValueTag.

As one embodiment, the first identifier is a Transaction ID.

As one embodiment, the meaning of sentence "the first identifier is used to determine a version of the second signaling or whether it is modified" comprises: the first identifier is used to determine whether the received second signaling is repeated.

As one embodiment, the meaning of sentence "the first identifier is used to determine a version of the second signaling or whether it is modified" comprises: the first identifier is used to determine whether the received second signaling has been received.

As one embodiment, the meaning of sentence "the first identifier is used to determine a version of the second signaling or whether it is modified" comprises: when a signaling having the same name as the second signaling and carrying the first identifier is received after the second signaling, the signaling with the same name is discarded or ignored.

As one embodiment, the second signaling and a signaling having the same name as the second signaling but not carrying the first identifier are different versions.

As one embodiment, the second signaling has a change relative to a signaling having the same name as the second signaling but not carrying the first identifier.

As one embodiment, the second operation set is MAC reset for L1L2 mobility.

As one embodiment, the sentence "the second operation set comprises at least one of: at least canceling triggered beam failure recovery (BFR), clearing a message 3 (Msg3) buffer, and clearing a message A (MSGA) buffer" means: the second operation set comprises clearing an Msg3 buffer and clearing an MSGA buffer; and the second operation set does not comprise canceling triggered BFR.

As one embodiment, the sentence "the second operation set comprises at least one of: at least canceling triggered beam failure recovery (BFR), clearing a message 3 (Msg3) buffer, and clearing a message A (MSGA) buffer" means: the second operation set does not comprise clearing an Msg3 buffer and clearing an MSGA buffer; and the second operation set comprises canceling triggered BFR.

As one embodiment, the sentence "the second operation set comprises at least one of: at least canceling triggered beam failure recovery (BFR), clearing a message 3 (Msg3) buffer, and clearing a message A (MSGA) buffer" means: the second operation set comprises clearing an Msg3 buffer and clearing an MSGA buffer; and the second operation set comprises canceling triggered BFR.

### Embodiment 2

Embodiment 2 illustrates a schematic diagram of a network architecture according to the present application, as shown in Figure 2.

Figure 2 illustrates a diagram of a network architecture 200 of 5G NR, long-term evolution (LTE) and long-term evolution advanced (LTE-A) systems. The 5G NR or LTE network architecture 200 may be referred to as a 5G system (5GS)/evolved packet system (EPS) 200 or some other suitable terms. The 5GS/EPS 200 may comprise one or more pieces of user equipment (UE) 201, a next generation radio access network (NG-RAN) 202, a 5G core network (5GC)/evolved packet core (EPC) 210, home subscriber server (HSS)/unified data management (UDM) 220 and an Internet service 230. The 5GS/EPS may be interconnected with other access networks, but these entities/interfaces are not shown for simplicity. As shown, the 5GS/EPS provides a packet switching service, however, those skilled in the art will readily appreciate that the various concepts presented throughout the present application may be extended to networks providing circuit switching services or other cellular networks. The NG-RAN comprises an NR Node B (gNB) 203 and other gNBs 204. The gNB203 provides user and control plane protocol terminations toward UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a transmitting and receiving point (TRP), or some other suitable terms. The gNB203 provides an access point to 5GC/EPC210 for the UE201. Instances of the UE201 comprise a cellular phone, a smart phone, a session initiation protocol (SIP) phone, a laptop, a personal digital assistant (PDA), a satellite radio, non-terrestrial base station communications, satellite mobile communications, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. A person skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the 5GC/EPC210 via an S1/NG interface. The 5GC/EPC210 comprises a mobility management entity (MME)/authentication management field (AMF)/session management function (SMF) 211, other MME/AMF/SMFs 214, a service gateway (S-GW)/user plane function (UPF) 212, and a packet data network gateway (P-GW)/UPF213. The MME/AMF/SMF211 is a control node that handles a signaling between the UE201 and the 5GC/EPC210. Generally, the MME/AMF/SMF211 provides bearer and connection management. All user Internet protocol (IP) packets are transmitted through S-GW/UPF212, and the S-GW/UPF212 itself is connected to P-GW/UPF213. The P-GW provides UE IP address allocation and other functions. The P-GW/UPF213 is connected to an Internet service 230. The Internet service 230 comprises operator-corresponding Internet protocol services, which may specifically comprise Internet, Intranet, IP multimedia subsystem (IMS) and packet switching streaming services.

As one embodiment, a first node in the present application is UE201.

As one embodiment, a base station of a second node in the present application is a gNB203.

As one embodiment, a wireless link from UE201 to an NR Node B is an uplink.

As one embodiment, a wireless link from an NR Node B to UE201 is a downlink.

As one embodiment, the UE201 supports relay transmission.

As one embodiment, the UE201 comprises a mobile phone.

As one embodiment, the UE201 is a means of transportation comprising an automobile.

As one embodiment, the gNB203 is a MacroCellular base station.

As one embodiment, the gNB203 is a Micro Cell base station.

As one embodiment, the gNB203 is a Pico Cell base station.

As one embodiment, the gNB203 is a flying platform device.

As one embodiment, the gNB203 is a satellite device.

### Embodiment 3

Embodiment 3 shows a schematic diagram of an embodiment of a wireless protocol architecture of a user plane and a control plane according to the present application, as shown in Figure 3. Figure 3 is a schematic diagram illustrating an embodiment of a radio protocol architecture for a user plane 350 and a control plane 300, and Figure 3 shows a radio protocol architecture for the control plane 300 between a first node (UE, a gNB, or a satellite or aircraft in an NTN) and a second node (a gNB, UE, or a satellite or aircraft in an NTN), or between two pieces of UE using three layers: Layer 1, Layer 2, and Layer 3. Layer 1 (Layer L1) is the lowest layer and implements various physical layer (PHY) signal processing functions. Layer L1 will be referred to herein as a PHY301. Layer 2 (Layer L2) 305 is above the PHY301 and is responsible for links between a first node and a second node and between two pieces of UE through the PHY301. Layer L2 305 comprises a medium access control (MAC) sublayer 302, a radio link control (RLC) sublayer 303 and a packet data convergence protocol (PDCP) sublayer 304, and these sublayers terminate at a second node. The PDCP sublayer 304 provides multiplexing between different radio bearers and logical channels. The PDCP sublayer 304 also provides security by encrypting data packets and provides handover support for a first node between second nodes. The RLC sublayer 303 provides segmentation and reassembly of upper-layer data packets, retransmission of lost data packets, and reordering of the data packets to compensate for out-of-order reception due to a HARQ. The MAC sublayer 302 provides multiplexing between logical and transport channels. The MAC sublayer 302 is also responsible for allocating various radio resources (e.g., resource blocks) in one cell between first nodes. The MAC sublayer 302 is also responsible for HARQ operations. A radio resource control (RRC) sublayer 306 in Layer 3 (Layer L3) in the control plane 300 is responsible for obtaining radio resources (i.e., radio bearers) and configuring lower layers using an RRC signaling between a second node and a first node. A PC5 signaling protocol (PC5-S) sublayer 307 is responsible for processing signaling protocols of a PC5 interface. The radio protocol architecture for the user plane 350 comprises Layer 1 (Layer L1) and Layer 2 (Layer L2). The radio protocol architecture for a first node and a second node in the user plane 350 is substantially the same as the corresponding layers and sublayers in the control plane 300 as for a physical layer 351, a PDCP sublayer 354 in Layer L2 355, an RLC sublayer 353 in Layer L2 355, and a MAC sublayer 352 in Layer L2 355, but the PDCP sublayer 354 also provides header compression for upper layer data packets to reduce the radio transmission overhead. Layer L2 355 in the user plane 350 also comprises a service data adaptation protocol (SDAP) sublayer 356, which is responsible for mapping between QoS flows and data radio bearers (DRBs) to support the diversity of services. An SRB may be regarded as a service or an interface provided by a PDCP layer to a higher layer, such as an RRC layer. In an NR system, SRBs comprise SRB1, SRB2, and SRB3, and SRB4 when it comes to secondary link communication, which are used to transmit different types of control signalings. SRBs are bearers between UE and an access network, and are used to transmit control signalings comprising RRC signalings between the UE and the access network. SRB1 has special significance for UE. After each UE establishes an RRC connection, there will be an SRB1 for transmitting an RRC signaling. Most of the signaling is transmitted through an SRB1. If an SRB 1 is interrupted or unavailable, UE must perform RRC reestablishment. SRB2 is generally only used to transmit NAS signalings or signalings related to security. UE may not be configured with an SRB3. Except for emergency services, UE must establish an RRC connection with a network for subsequent communication. Although not shown, a first node may have several upper layers above Layer L2 355. In addition, it also comprises a network layer (e.g., IP layer) terminated at P-GW on the network side and an application layer terminated at the other terminal of the connection (e.g., remote UE, servers, etc.). For UE involved in relay services, its control plane may also comprise an adaptation sublayer sidelink relay adaptation protocol (SRAP) 308, and its user plane may also comprise an adaptation sublayer SRAP358. The introduction of an adaptation layer helps lower layers, such as a MAC layer, such as an RLC layer, to multiplex and/or distinguish data from a plurality of source UE. For nodes not involved in relay communication, PC5-S307, SRAP308, and SRAP358 are not required in a communication process.

As one embodiment, a wireless protocol architecture in Figure 3 is applicable to the first node in the present application.

As one embodiment, a wireless protocol architecture in Figure 3 is applicable to the second node in the present application.

As one embodiment, the first signaling in the present application is generated in RRC306.

As one embodiment, the second signaling in the present application is generated in a MAC302 or a PHY301.

As one embodiment, the first signal in the present application is generated in a MAC302 or a PHY301.

### Embodiment 4

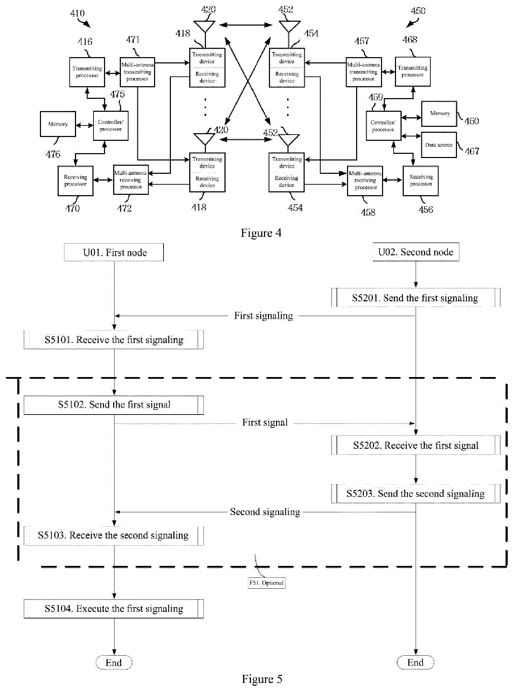

Embodiment 4 shows a schematic diagram of a first communication device and a second communication device according to one embodiment of the present application, as shown in Figure 4. Figure 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, and optionally may also comprise a multi-antenna transmitting processor 457, a multi-antenna receiving processor 458, a transmitting device/receiving device 454 and an antenna 452.

The second communication device 410 comprises a controller/processor 475, a memory 476, a receiving processor 470, a transmitting processor 416, and optionally may also comprise a multi-antenna receiving processor 472, a multi-antenna transmitting processor 471, a transmitting device/receiving device 418 and an antenna 420.

In transmission from the second communication device 410 to the first communication device 450, at the second communication device 410, upper layer data packets from a core network are provided to the controller/processor 475. The controller/processor 475 implements the functionality of Layer L2 (Layer-2). In transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signalings to the first communication device 450. The transmitting processor 416 and the multi-antenna transmitting processor 471 implement various signal processing functions for the L1 layer (i.e., the physical layer). The transmitting processor 416 implements coding and interlacing to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more spatial streams. The transmitting processor 416 then maps each spatial stream to a subcarrier, multiplexes with a reference signal (e.g., a pilot) in a time domain and/or a frequency domain, and then uses inverse fast Fourier transform (IFFT) to generate a physical channel carrying a time-domain multi-carrier symbol stream. The multi-antenna transmitting processor 471 then performs a sending analog precoding/beamforming operation on the time domain multi-carrier symbol stream. Each transmitting device 418 converts a baseband multi-carrier symbol stream provided by the multi-antenna transmitting processor 471 into a radio frequency stream, and then provides it to a different antenna 420.

In transmission from the second communication device 410 to the first communication device 450, at the first communication device 450, each receiving device 454 receives a signal through its corresponding antenna 452. Each receiving device 454 recovers information modulated onto a radio frequency carrier and converts a radio frequency stream into a baseband multi-carrier symbol stream and provides it to a receiving processor 456. The receiving processor 456 and the multi-antenna receiving processor 458 implement various signal processing functions of Layer L1. The multi-antenna receiving processor 458 performs a receiving analog precoding/beamforming operation on the baseband multi-carrier symbol stream from the receiving device 454. The receiving processor 456 uses a fast Fourier transform (FFT) to convert a baseband multi-carrier symbol stream after the receiving analog precoding/beamforming operation from a time domain to a frequency domain. In the frequency domain, a data signal and a reference signal of a physical layer are demultiplexed by the receiving processor 456, wherein the reference signal will be used for channel estimation, and the data signal is recovered after multi-antenna detection in the multi-antenna receiving processor 458 into any spatial stream destined for the first communication device 450. Symbols on each spatial stream are demodulated and recovered in the receiving processor 456, and soft decisions are generated. The receiving processor 456 then decodes and deinterlaces the soft decisions to recover upper layer data and control signals transmitted by the second communication device 410 on a physical channel. The upper layer data and control signals are then provided to the controller/processor 459. TThe controller/processor 459 implements the functions of Layer L2. The controller/processor 459 may be associated with a memory 460 storing program codes and data. The memory 460 may be referred to as a computer-readable medium. In transmission from the second communication device 410 to the second communication device 450, the controller/processor 459 provides demultiplexing between transport and logical channels, packet reassembly, decryption, header decompression, and control signal processing to recover upper layer data packets from a core network. The upper layer data packets are then provided to all protocol layers above Layer L2. Various control signals may also be provided to L3 for L3 processing.

In transmission from the first communication device 450 to the second communication device 410, at the first communication device 450, a data source 467 is used to provide upper layer data packets to the controller/processor 459. The data source 467 represents all protocol layers above Layer L2. Similar to sending function at the second communication device 410 described in transmission from the second communication device 410 to the first communication device 450, the controller/processor 459 implements header compression, encryption, packet segmentation and reordering, and multiplexing between logical and transport channels based on radio resource allocation, and implements the functions of Layer L2 for the user plane and the control plane. The controller/processor 459 is also responsible for retransmission of lost packets and signalings to the second communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then the transmitting processor 468 modulates a generated spatial stream into a multi-carrier/single-carrier symbol stream, which is provided to a different antenna 452 via the transmitting device 454 after analog precoding/beamforming operations in the multi-antenna transmitting processor 457. The data source 467 represents all protocol layers above Layer L2.

In transmission from the first communication device 450 to the second communication device 410, functions at the second communication device 410 are similar to receiving functions at the first communication device 450 described in transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of Layer L1. The controller/processor 475 implements functions of Layer L2. The controller/processor 475 may be associated with a memory 476 storing program codes and data. The memory 476 may be referred to as a computer-readable medium. In transmission from the first communication device 450 to the second communication device 410, the controller/processor 475 provides demultiplexing between transport and logical channels, packet reassembly, decryption, header decompression, and control signal processing to recover upper layer data packets from UE450. The upper-layer data packets from the controller/processor 475 may be provided to a core network.

As one embodiment, the first communication device 450 apparatus comprises: at least one processor and at least one memory, and the at least one memory comprises a computer program code; and the at least one memory and the computer program code are configured to be used together with the at least one processor, and the first communication device 450 apparatus at least: receives a first signaling, wherein the first signaling comprises a first cell identity, and the first cell identity is configured for a target special cell (SpCell); and executes the first signaling, wherein the behavior of executing the first signaling comprises executing a target operation set. The first signaling is a signaling of a radio resource control (RRC) layer; the first signaling comprises a first field; the first field is used to configure the target SpCell, and the first field is SpCellConfig; the target operation set is related to whether the behavior of executing the first signaling depends on reception of a second signaling; the second signaling is used to indicate execution of the first signaling, and the second signaling is a control signaling of a medium access control (MAC) layer or control information of a physical layer; when execution of the first signaling does not depend on reception of the second signaling, the target operation set comprises a first operation set and a second operation set; when execution of the first signaling depends on reception of the second signaling, the target operation set comprises only the latter of the first operation set and the second operation set; the first operation set and the second operation set are both for a MAC entity corresponding to a cell group of the target SpCell; the first operation set is orthogonal to the second operation set; the first operation set comprises at least one of: clearing soft buffers of all downlink hybrid automatic repeat reQuest (HARQ) processes except for those used for multicast broadcast service (MBS) broadcast, setting new data indicators of all uplink HARQ processes to 0, for each downlink HARQ process considering next received transmission for one transport block (TB) as earliest transmission, and stopping all timers in a first timer set which comprises at least one timer; and the second operation set comprises at least one of at least canceling triggered beam failure recovery (BFR), clearing a message 3 (Msg3) buffer, and clearing a message A (MSGA) buffer.

As one embodiment, the first communication device 450 comprises: a memory storing a computer-readable instruction program, the computer-readable instruction program generates an action when executed by at least one processor, and the action comprises: receiving a first signaling, wherein the first signaling comprises a first cell identity, and the first cell identity is configured for a target special cell (SpCell); and executing the first signaling, wherein the behavior of executing the first signaling comprises executing a target operation set. The first signaling is a signaling of a radio resource control (RRC) layer; the first signaling comprises a first field; the first field is used to configure the target SpCell, and the first field is SpCellConfig; the target operation set is related to whether the behavior of executing the first signaling depends on reception of a second signaling; the second signaling is used to indicate execution of the first signaling, and the second signaling is a control signaling of a medium access control (MAC) layer or control information of a physical layer; when execution of the first signaling does not depend on reception of the second signaling, the target operation set comprises a first operation set and a second operation set; when execution of the first signaling depends on reception of the second signaling, the target operation set comprises only the latter of the first operation set and the second operation set; the first operation set and the second operation set are both for a MAC entity corresponding to a cell group of the target SpCell; the first operation set is orthogonal to the second operation set; the first operation set comprises at least one of clearing soft buffers of all downlink hybrid automatic repeat reQuest (HARQ) processes except for those used for multicast broadcast service (MBS) broadcast, setting new data indicators of all uplink HARQ processes to 0, for each downlink HARQ process considering next received transmission for one transport block (TB) as earliest transmission, and stopping all timers in a first timer set which comprises at least one timer; and the second operation set comprises at least one of at least canceling triggered beam failure recovery (BFR), clearing a message 3 (Msg3) buffer, and clearing a message A (MSGA) buffer.

As one embodiment, the first communication device 450 corresponds to a first node in the present application.

As one embodiment, the second communication device 410 corresponds to a second node in the present application.

As one embodiment, the first communication device 450 is a piece of UE.

As one embodiment, the first communication device 450 is one vehicle-mounted terminal.

As one embodiment, the second communication device 450 is one relay.

As one embodiment, the second communication device 410 is one satellite.

As one embodiment, the second communication device 410 is one aircraft.

As one embodiment, the second communication device 410 is one base station.

As one embodiment, the receiving device 454 (comprising the antenna 452), the receiving processor 456 and the controller/processor 459 are used to receive the first signaling in the present application.

As one embodiment, the receiving device 454 (comprising the antenna 452), the receiving processor 456 and the controller/processor 459 are used to receive the second signaling in the present application.

As one embodiment, the transmitting device 454 (comprising the antenna 452), the transmitting processor 468 and the controller/processor 459 are used to send the first signal in the present application.

As one embodiment, the transmitting device 418 (comprising the antenna 420), the transmitting processor 416 and the controller/processor 475 are used to send the first signaling in the present application.

As one embodiment, the transmitting device 418 (comprising the antenna 420), the transmitting processor 416 and the controller/processor 475 are used to send the second signaling in the present application.

As one embodiment, the receiving device 418 (comprising the antenna 420), the receiving processor 470 and the controller/processor 475 are used to receive the first signal in the present application.

### Embodiment 5

Embodiment 5 illustrates a flow chart of wireless signal transmission according to one embodiment of the present application, as shown in Figure 5. In Figure 5, U01 corresponds to a first node of the present application, and U02 corresponds to a second node of the present application. It is particularly noted that the order in this example does not limit the signal transmission order and implementation order in the present application, and steps in F51 are optional.

For the a **first node U01**, a first signaling is received in step S5101; a first signal is sent in step S5102; a second signaling is received in step S5103; and a first signaling is executed in step S5104.

For a **second node U02**, a first signaling is sent in step S5201; a first signal is received in step S5202; and a second signaling is sent in step S5203.

In Embodiment 5, the first signaling comprises a first cell identity, and the first cell identity is configured for a target special cell (SpCell); and the behavior of executing the first signaling comprises executing a target operation set,
wherein the first signaling is a signaling of a radio resource control (RRC) layer; the first signaling comprises a first field; the first field is used to configure the target SpCell, and the first field is SpCellConfig; the target operation set is related to whether the behavior of executing the first signaling depends on reception of a second signaling; the second signaling is used to indicate execution of the first signaling, and the second signaling is a control signaling of a medium access control (MAC) layer or control information of a physical layer; when execution of the first signaling does not depend on reception of the second signaling, the target operation set comprises a first operation set and a second operation set; when execution of the first signaling depends on reception of the second signaling, the target operation set comprises only the latter of the first operation set and the second operation set; the first operation set and the second operation set are both for a MAC entity corresponding to a cell group of the target SpCell; the first operation set is orthogonal to the second operation set; the first operation set comprises at least one of clearing soft buffers of all downlink hybrid automatic repeat reQuest (HARQ) processes except for those used for multicast broadcast service (MBS) broadcast, setting new data indicators of all uplink HARQ processes to 0, for each downlink HARQ process considering next received transmission for one transport block (TB) as earliest transmission, and stopping all timers in a first timer set which comprises at least one timer; and the second operation set comprises at least one of at least canceling triggered BFR, clearing an Msg3 buffer, and clearing an MSGA buffer.

As one embodiment, the second node U02 is one base station.

As one embodiment, the second node U02 is one network device.

As one embodiment, the second node U02 is a source cell of the first node U01.

As one embodiment, the second node U02 is a source SpCell of the first node U01.

As one embodiment, the second node U02 is a PCell of the first node U01 when receiving the first signaling.

As one embodiment, the second node U02 is a PSCell of the first node U01 when receiving the first signaling.

As one embodiment, the first node U01 switches from the second node U02 to the target SpCell.

As one embodiment, the first signaling comprises pre-configured parameters for switching.

As one embodiment, after execution of step S5104 is completed by the first node U01, a SpCell of the first node U01 is the target SpCell.

As one embodiment, an air interface between the first node U01 and the second node U02 is a Uu interface.

As one embodiment, the first node U01 is in an RRC connected state.

As one embodiment, when execution of the first signaling does not depend on reception of the second signaling, the first node U01 needs to configure L3-based measurement and reports.

As one sub-embodiment of this embodiment, the measurement comprises configuring at least one measObjectNR.

As one sub-embodiment of this embodiment, the measurement comprises configuring a frequency for which the measurement is performed.

As one sub-embodiment of this embodiment, the measurement comprises configuring a cell for which the measurement is performed.

As one sub-embodiment of this embodiment, the measurement comprises configuring a reference signal resource for which the measurement is performed.

As one sub-embodiment of this embodiment, the measurement comprises configuring measurement time for which the measurement is performed.

As one sub-embodiment of this embodiment, the report comprises configuring at least one reportConfig.

As one sub-embodiment of this embodiment, each configured measurement comprises one measurement identity, measId, and each measurement identity is associated with one report configuration.

As one sub-embodiment of this embodiment, the report comprises configuring a triggering condition for reports, comprising periodic triggering and event triggering.

As one sub-embodiment of this embodiment, the report comprises statistics for which the report is configured.

As one embodiment, after the second node U02 receives a report, cell handover is determined.

As one embodiment, when execution of the first signaling depends on reception of the second signaling, the first node U01 may not configure L3-based measurement and reports.

As one sub-embodiment of this embodiment, the second node U02 determines cell handover based on the first signal, and the first signal comprises a measurement result of L1 or a target cell recommended based on the measurement result of L1.

As one embodiment, L3 (Layer 3)-based measurement means: using an L3 filter to process measurement data.

As one embodiment, L1 (Layer 1)-based measurement means: using an L1 filter to process measurement data.

As one embodiment, a measurement result of L3 is smoother than a measurement result of L1, but it takes longer time to obtain.

As one embodiment, the first signaling is used to configure the first signal.

As one embodiment, step S5101 is before step S5102.

As one embodiment, step S5103 is after step S5102.

As one embodiment, step S5104 is before step S5103.

As one embodiment, step S5201 is before step S5202.

As one embodiment, step S5203 is after step S5202.

As one embodiment, the first signal is used to trigger the second signaling.

As one embodiment, the meaning of "execution of the first signaling depending on reception of the second signaling" comprises: the first signaling is not executed immediately or automatically after being received, but waits for the second signaling, and the first signaling is executed only when it is triggered by the second signaling.

As one embodiment, the first node U01, in response to receiving the second signaling, starts a second timer, wherein the second timer is a medium access control (MAC) sublayer timer.

As one embodiment, a stopping condition of the second timer comprises: receiving a fourth signal.

As one sub-embodiment of this embodiment, the fourth signal is DCI.

As one sub-embodiment of this embodiment, the fourth signal is sent by the second node U02.

As one sub-embodiment of this embodiment, the fourth signal is an ACK.

As one embodiment, the fourth signal is used to confirm that handover is successful.

As one embodiment, the fourth signal is used to confirm that handover is completed.

As one embodiment, the fourth signal is used to confirm that execution of the first signaling is completed.

As one embodiment, the fourth signal is used to confirm that execution of the second signaling is completed.

As one embodiment, a stopping condition of the second timer comprises: random access to the target SpCell is completed.

As one embodiment, a stopping condition of the second timer comprises: execution of the first signaling is completed.

As one embodiment, expiration of the second timer is used to determine a failure.

As one embodiment, expiration of the second timer is used to determine a cell handover failure.

As one embodiment, expiration of the second timer is used to determine a failure of execution of the first signaling.

As one embodiment, expiration of the second timer is used for RRC connection reestablishment.

As one embodiment, expiration of the second timer is used to initiate beam failure recovery.

As one embodiment, expiration of the second timer is used to retransmit information comprised in the first signal.

As one embodiment, expiration of the second timer is used to execute configurations for SpCells other than the target SpCell.

As one embodiment, expiration of the second timer is used to determine that cells other than the target SpCell are new target SpCells, and to execute corresponding configurations.

As one sub-embodiment of this embodiment, the first signaling comprises the corresponding configurations.

As one sub-embodiment of this embodiment, signalings other than the first signaling comprise the corresponding configurations.

As one sub-embodiment of this embodiment, the corresponding configurations comprise spCellConfig at least for the new target SpCells.

As one sub-embodiment of this embodiment, execution of the corresponding configurations does not depend on reception of signalings from the second node U02.

As one embodiment, a third timer is started with the sending of the first signal.

As one embodiment, before expiration of the third timer, the first node U01 will no longer send MAC CEs with the same name as a MAC CE comprised in the first signal.

As one embodiment, the first node U01 sends MAC CEs with the same name as a MAC CE comprised in the first signal only after expiration of the third timer.

As one embodiment, expiration of the third timer is used to trigger retransmission of the information comprised in the first signal.

As one embodiment, expiration of the third timer is used to trigger sending of the fifth signal, and the fifth signal comprises the same MAC CE as the first signal.

As one embodiment, the fifth signal is retransmission of the first signal.

As one embodiment, the fifth signal is generated in a physical layer.

As one embodiment, the fifth signal is generated in a MAC layer.

As one embodiment, the first signal comprises uplink control information (UCI).

As one embodiment, reception of the second signaling is used to stop the third timer.

As one embodiment, expiration of the third timer is used to determine that cells other than the target SpCell are new target SpCells, and to execute corresponding configurations.

As one sub-embodiment of this embodiment, the first signaling comprises the corresponding configurations.

As one sub-embodiment of this embodiment, the corresponding configurations comprise spCellConfig at least for the new target SpCells.

As one sub-embodiment of this embodiment, execution of the corresponding configurations does not depend on reception of signalings from the second node U02.

As one sub-embodiment of this embodiment, after executing the corresponding configurations, the first node U01 is switched to the new target SpCells.

As one embodiment, the second signaling is DCI.

As one embodiment, the first node U01 monitors a PDCCH to receive the second signaling.

As one embodiment, the second signaling comprises a MAC CE.

As one embodiment, the second signaling is unicast.

As one embodiment, the second signaling indicates reference signal resources of the target SpCell.

As one embodiment, the second signaling indicates beam information of the target SpCell.

As one embodiment, the first signal indicates reference signal resources of the recommended target SpCell.

As one embodiment, the first signal indicates beam information of the recommended target SpCell.

As one embodiment, in step S5104, executing the first signaling comprises applying a transmission configuration indication (TCI) state.

As one embodiment, in step S5104, executing the first signaling comprises applying a transmission configuration indication (TCI) state for the target SpCell.

As one embodiment, in step S5104, executing the first signaling comprises applying a transmission configuration indication (TCI) state associated with the target SpCell.

As one embodiment, in step S5104, executing the first signaling comprises applying a unified TCI state.

As one embodiment, after receiving the first signaling, the first node U01 performs feedback confirmation.

As one embodiment, the first signaling is comprised in an RRCReconfiguration message.

As one embodiment, when execution of the first signaling does not depend on reception of the second signaling, the first node U01 initiates random access to the target SpCell when executing the first signaling or after step S5104.

As one embodiment, the first signaling is used to configure the first signal.

As one embodiment, when execution of the first signaling does not depend on reception of the second signaling, a random access process for the target SpCell is initiated accompanied by execution of the first signaling; and when execution of the first signaling depends on reception of the second signaling, a first signal is sent, and the random access process for the target SpCell is initiated accompanied by sending of the first signal.

As one embodiment, when execution of the first signaling depends on reception of the second signaling, execution of the first signaling will not accompany a random access process for the target SpCell.

As one embodiment, the first signal is sent after the first signaling and before the second signaling.

As one embodiment, the first signal is used to report a measurement result or report a recommended target cell or report a recommended reference signal resource.

As one embodiment, the first signaling comprises a first threshold, and the first threshold is used to control the sending of the first signal.

As one embodiment, the first signaling indicates a random access resource for the target SpCell; and the random access process for the target SpCell is initiated on the random access resource for the target SpCell indicated by the first signaling.

As one embodiment, the first signal is used to trigger the second signal.

As one embodiment, the first node U01, in response to expiration of the third timer, reports a failure indication to a higher layer, and the third timer is a timer of a MAC layer.

### Embodiment 6

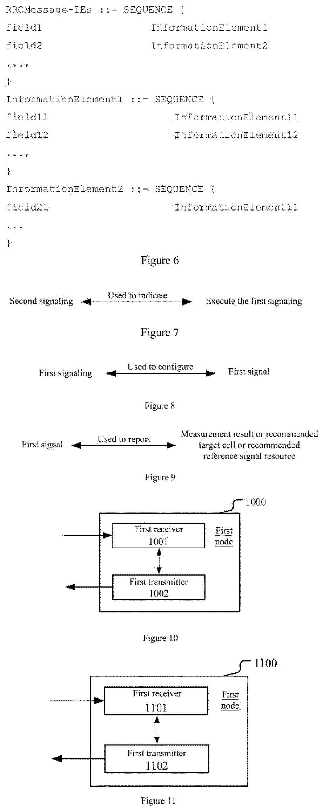

Embodiment 6 illustrates a schematic diagram of a signaling format according to one embodiment of the present application, as shown in Figure 6.
field1, field2, field11, field12, and field21 in Figure 6 are all fields.

As one embodiment, a format of an RRC message of the present application is based on relevant specifications of ISO ASN.1.

InformationElement1, InformationElement2, InformationElement11, and InformationElement12 in Figure 6 are all RRC IEs.

As one embodiment, one RRC message comprises one or more RRC information elements (IEs), such as RRCMessage-IEs in Figure 6.

As one embodiment, RRCMessage-IEs in Figure 6 refer to one RRC IE.

As one embodiment, RRCMessage-IEs in Figure 6 refer to any IEs of one RRC message.

As one embodiment, one RRC IE comprises one or more fields, such as field1 and field2 comprised in RRCMessage-IEs in Figure 6, such as Information.

As one embodiment, fields in Figure 6 are applicable to the first field of the present application.

As one embodiment, fields in Figure 6 are applicable to the second field of the present application.

As one embodiment, fields in Figure 6 are applicable to the third field of the present application.

As one embodiment, a value of one field in an RRC message may be one RRC IE, for example, in Figure 6, the value of field1 is InformationElement1.

As one embodiment, one field in an RRC message bears or carries one RRC IE, for example, in Figure 6, field1 bears or carries InformationElement1.

As one embodiment, one field in an RRC message corresponds to one RRC IE, for example, in Figure 6, field1 corresponds to InformationElement1.

As one embodiment, in an RRC message, different fields may correspond to or carry or have the same RRC IE value, for example, field11 and field21 are both set to be InformationElement11.

As one embodiment, an IE in an RRC message may comprise one or more layers.

As one embodiment, an IE in an RRC message may comprise one or more sub-IEs.

As one embodiment, an IE in an RRC message may comprise one or more grandchild-IEs, and/or IEs of a deeper layer.

As one embodiment, an IE in an RRC message may comprise one or more sub-fields and/or grandchild-fields, for example, field1 is a sub-item of RRCMessage-IEs, and field11 is a grandchild-item of RRCMessage-IE; and a sub-field of an IE in one RRC message may also comprise its own sub-fields or grandchild-fields, and so on.

As one embodiment, the meaning of "the second field is reconfigurationWithSync" comprises: a name of the second field is "reconfiguration WithSync".

As one embodiment, an RRC IE borne or carried by the second field is Reconfiguration WithSync.

As one embodiment, the first field is a sub-item of the first signaling.

As one embodiment, the first field is a grandchild-item of the first signaling.

As one embodiment, the first field is a sub-item of a grandchild-item of the first signaling.

As one embodiment, the sub-item of one RRC IE is a first-layer item comprised in the one RRC IE.

As one embodiment, the grandchild-item of one RRC IE is a second-layer item comprised in the one RRC IE.

As one embodiment, a sub-item of a grandchild-item of one RRC IE is a third-layer item comprised in the one RRC IE.

As one embodiment, when execution of the first signaling depends on a second signaling, the first field of the first signaling uses a first format, and the first format does not comprise a second field; when execution of the first signaling does not depend on a second signaling, the first field of the first signaling uses a second format, and the first format comprises a second field; the second format does not comprise a second field; and the second field is reconfiguration WithSync.

As one embodiment, regardless of whether execution of the first signaling depends on a second signaling, the first field of the first signaling comprises a second field; and the second field is reconfiguration WithSync.

As one embodiment, fields in Figure 6 are applicable to a first format of the present application.

As one embodiment, fields in Figure 6 are applicable to a second format of the present application.

As one embodiment, execution of any signaling in the present application comprises executing all fields comprised in the any signaling.

As one embodiment, the meaning of "executing all fields comprised in the any signaling" comprises: executing all sub-fields, grandchild-fields, and so on comprised in the any signaling.

As one embodiment, the meaning of "executing all fields comprised in the any signaling" comprises: executing information elements corresponding to any field comprised in the any signaling.

As one embodiment, the meaning of "executing all fields comprised in the any signaling" comprises: executing all information elements comprised in the any signaling.

As one embodiment, the any signaling is an RRC signaling.

As one embodiment, execution of the first signaling comprises executing all information elements comprised in the first signaling.

As one embodiment, execution of the first field comprised in the first signaling comprises executing information elements corresponding to the first field of the first signaling.

As one embodiment, execution of the second field comprised in the first field comprised in the first signaling comprises executing information elements corresponding to the second field comprised in the first field of the first signaling.

As one embodiment, the second field is a sub-field of the first field.

As one embodiment, the first format and the second format comprise different fields.

### Embodiment 7

Embodiment 7 illustrates a schematic diagram of a second signaling indicating execution of a first signaling according to one embodiment of the present application, as shown in Figure 7.

As one embodiment, the second signaling indicates handover to a target SpCell.

As one embodiment, the second signaling indicates execution of the first signaling.

As one embodiment, the second signaling comprises an identity or a configuration index of the first signaling.

As one embodiment, the second signaling indicates a first reference signal resource, and the first reference signal resource is associated with the target SpCell.

As one embodiment, the second signaling indicates an identity of a cell group to which the target SpCell belongs.

As one embodiment, the second signaling indicates an identity or index of an event or condition, and the identity or index of the event or condition is associated with the first signaling.

As one embodiment, the second signaling indicates one identity or configuration index, and the one identity or configuration index is associated with the first signaling.

As one embodiment, the second signaling indicates one identity or configuration index, and the first identity or configuration index is comprised in a first signal.

As one embodiment, the second signaling implicitly indicates the first signaling.

As one embodiment, the second signaling is associated with the first signaling, and receiving the second signaling indicates execution of the first signaling.

As one embodiment, a logical channel identity of the second signaling is used to determine execution of the first signaling.

As one embodiment, a configuration corresponding to a first candidate SpCell indicated by the second signaling belongs to the first signaling, and selecting the first candidate SpCell as a target SpCell triggers execution of the """/first signaling.

As one embodiment, the second signaling indicates a first candidate target SpCell and a second candidate target SpCell.

As one embodiment, the first signaling is for the first candidate target SpCell.

As one embodiment, one signaling other than a first signaling, such as a third signaling, is for the second candidate target SpCell.

As one embodiment, the third signaling is a signaling of an RRC layer.

As one embodiment, the third signaling comprises part of fields in an RRCReconfiguration message.

As one embodiment, the third signaling comprises Cell GroupC onfig.

As one embodiment, the third signaling comprises a configuration for the second target SpCell.

As one embodiment, the first node arbitrarily selects the first candidate SpCell or a second candidate SpCell as a target SpCell.

As one embodiment, the first node preferentially selects the first candidate SpCell among the first candidate SpCell or a second candidate SpCell as a target SpCell.

As one embodiment, the second signaling is or comprises one field in a piece of DCI.

As one sub-embodiment of this embodiment, the piece of DCI is in one of formats 0_1, 0_0, and 1_0.

As one sub-embodiment of this embodiment, the piece of DCI is in a form with its name comprising "2".

As one sub-embodiment of this embodiment, the piece of DCI is in a form with its name comprising "3".

As one sub-embodiment of this embodiment, the piece of DCI is in a form with its name comprising "4".

As one sub-embodiment of this embodiment, the piece of DCI is in a form with its name comprising "5".

As one embodiment, the first signal is one UCI on a specific physical uplink control channel (PUCCH) resource.

As one sub-embodiment of this embodiment, the specific PUCCH resource is a PUCCH resource configured by a serving cell of the first node.

As one sub-embodiment of this embodiment, the specific PUCCH resource is a PUCCH resource configured by a serving cell of the first node for transmitting the first signal.

As one embodiment, the second signaling is one PDCCH command.

As one embodiment, a resource indicated by the second signaling is associated with the target SpCell.

As one sub-embodiment of this embodiment, a resource indicated by the second signaling is associated with the first signaling, and upon receiving the second signaling indicating the resource, the first node executes the first signaling.

As one sub-embodiment of this embodiment, upon receiving the second signaling indicating the resource, the first node executes the first signaling.

As one embodiment, the first signal indicates the first signaling, and the second signaling is associated with the first signal.

As one sub-embodiment of this embodiment, upon receiving the second signaling, a signaling indicated by the first signal associated with the second signaling, i.e., the first signaling, is executed.

As one sub-embodiment of this embodiment, the second signaling is associated with the first signal through one identity or identifier.

As one sub-embodiment of this embodiment, the second signaling is associated with the first signal through resources.

As one sub-embodiment of this embodiment, the second signaling is associated with the first signal in a preconfigured manner.

As one sub-embodiment of this embodiment, the second signaling is associated with the first signal through spatial parameters.

As one sub-embodiment of this embodiment, the second signaling is associated with the first signal through parameters or identities of the same cell group.

### Embodiment 8

Embodiment 8 illustrates a schematic diagram of a first signaling used to configure a first signal according to one embodiment of the present application, as shown in Figure 8.

As one embodiment, the first signaling indicates resources occupied by the first signal.

As one embodiment, the first signaling indicates the maximum number of items comprised in the first signal.

As one embodiment, the first signaling indicates a candidate SpCell set that can be recommended by the first signal.

As one embodiment, the first signaling indicates a reference signal resource for which a measurement result comprised in the first signal is directed.

As one embodiment, the first signaling indicates an identity or index of a candidate SpCell recommended by the first signal.

As one embodiment, the first signaling indicates an identity or index of a reference signal resource recommended by the first signal.

As one embodiment, the first signaling indicates whether the first signal comprises a recommended candidate SpCell.

As one embodiment, the first signaling indicates whether the first signal comprises an identity or index of a recommended reference signal resource.

As one embodiment, the first signaling indicates a triggering condition of a first signal.

As one embodiment, a triggering condition of the first signal comprises: time triggering.

As one embodiment, a triggering condition of the first signal comprises: event triggering.

As one embodiment, a triggering condition of the first signal comprises: the quality of a current serving cell is lower than a first threshold.

As one embodiment, a triggering condition of the first signal comprises: a measurement result of a configured first reference signal resource is lower than a first threshold.

As one embodiment, a triggering condition of the first signal comprises: a measurement result of a configured first reference signal resource is lower than a first threshold and lasts for a certain time.

As one embodiment, a triggering condition of the first signal comprises: a measurement result of a configured first reference signal resource is lower than a first threshold, and a measurement result of a reference signal resource in a configured second reference signal resource set is higher than a second threshold.

As one embodiment, a triggering condition of the first signal comprises: a measurement result of a configured first reference signal resource is lower than a first threshold, and a measurement result of a reference signal resource in a configured second reference signal resource set is higher than a second threshold and lasts for a certain time.

As one embodiment, a triggering condition of the first signal comprises: a measurement result of a configured first reference signal resource is lower than a first threshold, and a measurement result of a reference signal resource in a configured second reference signal resource set exceeds a measurement result of the first reference signal resource by at least XdB.

As one embodiment, a triggering condition of the first signal comprises: a measurement result of a configured first reference signal resource is lower than a first threshold, and a measurement result of a reference signal resource in a configured second reference signal resource set exceeds a measurement result of the first reference signal resource by at least XdB and lasts for a certain time.

As one embodiment, the first signaling indicates the X, wherein X is a real number.

As one embodiment, the first signaling indicates the first threshold.

As one embodiment, the first signaling indicates the second threshold.

As one embodiment, the first signaling indicates the certain time.

As one embodiment, the first signaling configures a timer started with the sending of the first signal.

As one embodiment, the first signaling controls a timer for sending the first signal.

As one embodiment, the first signaling configures a timer triggered by the first signal.

As one embodiment, the first signaling configures a timer triggered by the second signaling.

As one embodiment, the first reference signal resource is used for wireless link monitoring.

As one embodiment, the first reference signal resource is used for beam failure detection.

As one embodiment, the second reference signal resource set is used for wireless link monitoring.

As one embodiment, the second reference signal resource set is used for beam failure detection.

As one embodiment, the second reference signal resource set is independently configured from a reference signal resource used for wireless link monitoring.

As one embodiment, the second reference signal resource set is independently configured from a reference signal resource used for beam failure detection.

As one embodiment, the first reference signal resource is independently configured from a reference signal resource used for wireless link monitoring.

As one embodiment, the first reference signal resource is independently configured from a reference signal resource used for beam failure detection.

As one embodiment, the first signaling indicates whether it is allowed to select other candidate SpCells after the first signaling fails to be successfully executed.

As one embodiment, the first signaling indicates whether it is allowed not to execute RRC connection reestablishment.

As one embodiment, the first signaling indicates whether it is allowed not to execute RRC connection reestablishment immediately.

As one embodiment, the first signaling indicates whether it is allowed to execute a conditional handover (CHO) evaluation after sending the first signal.

As one embodiment, the first signaling indicates whether it is allowed to execute a CHO evaluation after receiving the second signaling.

As one embodiment, the first signaling indicates whether it is allowed to execute a conditional PSCell change (CPC) evaluation after sending the first signal.

As one embodiment, the first signaling indicates whether it is allowed to execute a CPC evaluation after receiving the second signaling.

As one embodiment, the first signaling indicates whether a recovery process based on the first signaling is supported.

As one embodiment, the first signaling indicates whether a recovery process based on signaling execution triggered by a dependency on a signaling is supported.

As one embodiment, the first signaling indicates whether a recovery process based on L1L2 mobility is supported.

As one embodiment, the first signaling indicates timing assistance information of the target SpCell.

As one embodiment, the second signaling indicates timing assistance information of the target SpCell.

As one embodiment, when execution of the first signaling depends on the second signaling, the first signaling does not comprise uplink random access resources for the target SpCell; and when execution of the first signaling does not depend on the second signaling, the first signaling comprises uplink random access resources for the target SpCell.

As one embodiment, when execution of the first signaling depends on the second signaling, execution of the first signaling does not stop an evaluation of wireless link failure.

As one embodiment, the first signal comprises an identity or index of a reference signal in the second reference signal set.

As one embodiment, the first signal does not comprise an identity or index of the target SpCell.

As one embodiment, the size of the first signal is 0.

As one embodiment, the size of the first signal is greater than 0.

As one embodiment, the priority of the first signal is one of the highest in MAC CEs.

As one embodiment, the first signal only comprises a MAC subheader.

### Embodiment 9

Embodiment 9 illustrates a schematic diagram of a first signal used to report a measurement result or a recommended target cell or a recommended reference signal resource according to one embodiment of the present application, as shown in Figure 9.

As one embodiment, the first signal comprises a measurement result.

As one embodiment, a serving cell of the first node configures first measurement.

As one embodiment, the first measurement is L1 measurement.

As one embodiment, the first measurement is measurement for a first reference signal resource set.

As one embodiment, a serving cell of the first node configures the first measurement through the first signaling.

As one embodiment, the first measurement comprises measuring RSRP of L1.

As one embodiment, the first measurement comprises obtaining channel state information.

As one embodiment, the first signal reports a result of the first measurement.

As one embodiment, the first signal is sent only after the first measurement is completed.

As one embodiment, the first measurement is periodic.

As one embodiment, the first signal is also sent periodically.

As one embodiment, when a triggering condition is met, the first signal is also sent periodically.

As one embodiment, the triggering condition comprises that the quality of a current cell is lower than a given threshold.

As one embodiment, the triggering condition comprises that the quality of a target cell is higher than another given threshold.

As one embodiment, a result of the first measurement comprises measurement for a plurality of cells.

As one embodiment, the first measurement is for PCIs of a plurality of cells.

As one embodiment, the first signal comprises a recommended target cell.

As one embodiment, the first signal indicates an identity of a target cell or an index of a target cell.

As one sub-embodiment of this embodiment, the first signal does not comprise measurement results.

As one sub-embodiment of this embodiment, the index of the target cell is an index configuring the first measurement.

As one sub-embodiment of this embodiment, the index of the target cell is an index indicated by the first signaling.

As one sub-embodiment of this embodiment, an index of the target cell in the first signal is the same as an index in the configuration of the first measurement.

As one embodiment, the first node determines a recommended target cell according to results of the first measurement.

As one embodiment, the first node determines a recommended target cell according to parameters of conditions or criteria configured in the first signaling.

As one embodiment, the first node determines a recommended target cell according to the S criterion.

As one embodiment, the first node determines a recommended target cell according to an internal algorithm.

As one embodiment, the first signal indicates a plurality of recommended target cells.

As one embodiment, the target SpCell is one of the plurality of target cells.

As one embodiment, the target SpCell is one target cell indicated by the first signal.

As one embodiment, the recommended reference signal resource corresponds to one reference signal.

As one embodiment, the first signal comprises an index or identity of a recommended reference signal resource.

As one embodiment, a recommended reference signal resource comprised in the first signal comprises CSI-RS resources.

As one embodiment, a recommended reference signal resource comprised in the first signal comprises SSB resources.

As one embodiment, a recommended reference signal resource comprised in the first signal belongs to the first reference signal resource set.

As one embodiment, an index of a recommended reference signal resource comprised in the first signal is an index of the recommended reference signal resource in the first reference signal resource set.

As one embodiment, each reference signal resource in the first reference signal resource set is associated with one cell identity.

As one embodiment, each reference signal resource in the first reference signal resource set is mapped to one cell identity.

As one embodiment, the first signal indicates a recommended target cell by indicating an identity or index of a measurement configuration.

As one embodiment, the first signal indicates a recommended reference signal resource by indicating an identity or index of a measurement configuration.

As one embodiment, the first signal implicitly indicates the recommended target cell.

As one embodiment, the first signal implicitly indicates the recommended reference signal resource.

As one embodiment, the first signal may be used for beam failure recovery.

As one embodiment, a MAC CE name comprised in the second signaling comprises L1L2.

As one embodiment, a MAC CE name comprised in the second signaling comprises L2.

As one embodiment, a MAC CE name comprised in the second signaling comprises Mobility.

As one embodiment, a MAC CE name comprised in the first signal comprises L1L2.

As one embodiment, a MAC CE name comprised in the first signal comprises L2.

As one embodiment, a MAC CE name comprised in the first signal comprises Mobility.

As one embodiment, a MAC CE name comprised in the first signal comprises BFR.

As one embodiment, the first signal may comprise a target cell for a PCell and a target cell for a PSCell at the same time.

As one embodiment, the first signal may only comprise one of a target cell for a PCell and a target cell for a PSCell.

As one embodiment, a recommended target cell or a plurality of target cells indicated by the first signal are candidate target cells.

As one embodiment, the first signal comprises a first indication field, and the first indication field is used to indicate whether a recommended target cell is a target cell for a PCell or a target cell for a PSCell.

As one sub-embodiment of this embodiment, the first indication field occupies one bit.

As one embodiment, the first signal may simultaneously indicate a recommended candidate cell and a recommended reference signal resource.

As one embodiment, the recommended reference signal resource is also a recommended reference signal.

As one embodiment, one of the first signal and the second signaling is DCI and the other is a MAC CE.

As one embodiment, the first signal and the second signaling are both MAC CEs.

As one embodiment, the first signaling indicates that random access resources for the target SpCell are valid within a first window.

As one embodiment, the first node starts a third timer with the sending of the first signal.

As one embodiment, before expiration of the third timer, execution of the first signaling does not involve or accompany a random access process.

As one embodiment, after expiration of the third timer, accompanied by execution of the first signaling, the first node initiates random access to the target cell.

As one embodiment, in response to receiving the second signaling, the first node stops sending a signal for reporting a measurement result or a recommended target cell or a recommended reference signal resource.

As one sub-embodiment of this embodiment, the stopping sending refers to stopping sending during operation of the second timer.

As one embodiment, in response to receiving the second signaling, the first node stops sending a MAC CE with the same name as the MAC CE comprised in the first signal.

As one sub-embodiment of this embodiment, the stopping sending refers to stopping sending during operation of the second timer.

As one embodiment, in response to receiving the second signaling, the first node stops sending a MAC PDU with the same logical channel as that used by the first signal.

As one sub-embodiment of this embodiment, the stopping sending refers to stopping sending during operation of the second timer.

As one embodiment, in response to receiving the second signaling, the first node stops sending retransmissions or copies of the first signal.

As one sub-embodiment of this embodiment, the stopping sending refers to stopping sending during operation of the second timer.

As one embodiment, in response to receiving the second signaling, the first node cancels a triggered L1 measurement result report process.

As one embodiment, in response to receiving the second signaling, the first node cancels a recommended cell or recommended reference signal resource report process.

### Embodiment 10

Embodiment 10 illustrates a structural block diagram of a processing apparatus used in a first node according to one embodiment of the present application, as shown in Figure 10. In Figure 10, the processing apparatus 1000 in the first node comprises a first receiver 1001 and a first transmitter 1002. In Embodiment 10,
a first receiver 1001 receives a first signaling, wherein the first signaling comprises a first cell identity, and the first cell identity is configured for a target special cell (SpCell); and
the first receiver 1001 executes the first signaling, wherein the behavior of executing the first signaling comprises executing a target operation set,
wherein the first signaling is a signaling of a radio resource control (RRC) layer; the first signaling comprises a first field; the first field is used to configure the target SpCell, and the first field is SpCellConfig; the target operation set is related to whether the behavior of executing the first signaling depends on reception of a second signaling; the second signaling is used to indicate execution of the first signaling, and the second signaling is a control signaling of a medium access control (MAC) layer or control information of a physical layer; when execution of the first signaling does not depend on reception of the second signaling, the target operation set comprises a first operation set and a second operation set; when execution of the first signaling depends on reception of the second signaling, the target operation set comprises only the latter of the first operation set and the second operation set; the first operation set and the second operation set are both for a MAC entity corresponding to a cell group of the target SpCell; the first operation set is orthogonal to the second operation set; the first operation set comprises at least one of clearing soft buffers of all downlink hybrid automatic repeat reQuest (HARQ) processes except for those used for multicast broadcast service (MBS) broadcast, setting new data indicators of all uplink HARQ processes to 0, for each downlink HARQ process considering next received transmission for one transport block (TB) as earliest transmission, and stopping all timers in a first timer set which comprises at least one timer; and the second operation set comprises at least one of at least canceling triggered beam failure recovery (BFR), clearing a message 3 (Msg3) buffer, and clearing a message A (MSGA) buffer.

As one embodiment, the first operation set comprises at least one of: initializing a first parameter of each logical channel to 0, the first parameter being used for a logical channel priority process; stopping an ongoing random access process; canceling a triggered buffer state report process; and canceling a triggered recommended bit rate query process,
wherein the first operation set is irrelevant to secondary cell group (SCG) deactivation.

As one embodiment, the second operation set comprises at least one of: discarding a contention-free random access resource indicated by an explicit signaling; canceling a triggered scheduling request process; canceling a triggered power headroom report process; considering all timeAlignmentTimer timers expired; resetting a first counter, the first counter being used for beam failure recovery; and resetting all listen before talk counters (LBT_COUNTER),
wherein the second operation set is irrelevant to SCG deactivation.

As one embodiment, the second operation set comprises: canceling a triggered L1 measurement result report process.

As one embodiment, the second operation set comprises: canceling a recommended cell or a recommended reference signal resource report process.

As one embodiment, when execution of the first signaling does not depend on reception of the second signaling, execution of the first signaling comprises starting a first timer; when execution of the first signaling depends on reception of the second signaling, execution of the first signaling does not comprise starting a first timer; and expiration of the first timer is used to trigger RRC connection reestablishment, and a stopping condition of the first timer comprises successful completion of a random access process for the target SpCell.

As one embodiment, when execution of the first signaling does not depend on reception of the second signaling, a first transmitter 1002 initiates a random access process for the target SpCell accompanied by execution of the first signaling; and when execution of the first signaling depends on reception of the second signaling, the first transmitter 1002 sends a first signal, and initiates a random access process for the target SpCell accompanied by sending of the first signal,
wherein when execution of the first signaling depends on reception of the second signaling, execution of the first signaling does not accompany a random access process for the target SpCell; the first signal is sent after the first signaling and before the second signaling; and the first signal is used to report a measurement result or report a recommended target cell or a recommended reference signal resource.

As one embodiment, a first transmitter 1002 starts a third timer in response to sending the first signal; and
the first transmitter 1002 sends a third signal in response to expiration of the third timer, wherein the third signal is used to report a measurement result or report a recommended target cell or a recommended reference signal resource.

As one embodiment, the second receiver 1001 receives the second signaling; and starts a second timer in response to reception of the second signaling,
wherein the second timer is a MAC sublayer timer.

As one embodiment, execution of the first signaling comprises storing parameters changed by the second operation set.

As one embodiment, in response to failure of successful execution of the first signaling, the parameters changed by the second operation set are recovered for use.

As one embodiment, parameters changed by the second operation set are parameters of MAC.

As one embodiment, the first node is a piece of user equipment (UE).

As one embodiment, the first node is one terminal supporting a large latency difference.

As one embodiment, the first node is one terminal supporting an NTN.

As one embodiment, the first node is one aircraft or ship.

As one embodiment, the first node is one mobile phone or vehicle-mounted terminal.

As one embodiment, the first node is one relay UE and/or U2N remote UE.

As one embodiment, the first node is one IoT terminal or industrial IoT terminal.

As one embodiment, the first node is one device supporting low-latency and highreliability transmission.

As one embodiment, the first node is a secondary link communication node.

As one embodiment, the first receiver 1001 comprises at least one of an antenna 452, a receiving device 454, a receiving processor 456, a multi-antenna receiving processor 458, a controller/processor 459, a memory 460, or a data source 467 in Embodiment 4.

As one embodiment, the first transmitter 1002 comprises at least one of an antenna 452, a transmitting device 454, a transmitting processor 468, a multi-antenna transmitting processor 457, a controller/processor 459, a memory 460, or a data source 467 in Embodiment 4.

### Embodiment 11

Embodiment 11 illustrates a structural block diagram of a processing apparatus used in a first node according to one embodiment of the present application, as shown in Figure 11. In Figure 11, a processing apparatus 1100 in the first node comprises a first receiver 1101 and a first transmitter 1102. In Embodiment 11,
a first receiver 1101 receives a first signaling, wherein the first signaling comprises a first cell identity, and the first cell identity is configured for a target special cell (SpCell); and
the first receiver 1101 executes the first signaling,
wherein the first signaling is a signaling of a radio resource control (RRC) layer; the first signaling comprises a first field; the first field is used to configure the target SpCell, and the first field is SpCellConfig; the target operation set is related to whether the behavior of executing the first signaling depends on reception of a second signaling; the second signaling is used to indicate execution of the first signaling, and the second signaling is a control signaling of a medium access control (MAC) layer or control information of a physical layer; when execution of the first signaling does not depend on reception of the second signaling, the target operation set is a first operation set, and the behavior of executing the first signaling comprises executing the target operation set; when execution of the first signaling depends on reception of the second signaling, the target operation set is a second operation set, and the second operation set is executed after the first signaling is executed; the first operation set is an operation comprised in MAC reset; and the second operation set comprises at least one of at least canceling triggered beam failure recovery (BFR), clearing a message 3 (Msg3) buffer, and clearing a message A (MSGA) buffer.

As one embodiment, the second operation set is a true subset of the first operation set.

As one embodiment, completion of execution of the first signaling triggers execution of the second operation set.

As one embodiment, completion of a random access process for the target SpCell triggers execution of the second operation set.

As one embodiment, the first node immediately executes the second operation set after the first signaling is completed.

As one embodiment, the first receiver 1101 receives a third signaling, and executes the second operation set in response to receiving the third signaling.

As one embodiment, the third signaling is used to confirm completion of execution of the first signaling.

As one embodiment, the third signaling is used to confirm successful execution of the second signaling.

As one embodiment, the third signaling is used to confirm completion of handover.

As one embodiment, the third signaling is DCI.

As one embodiment, the first operation set comprises at least one of: initializing a first parameter of each logical channel to 0, the first parameter being used for a logical channel priority process; stopping an ongoing random access process; canceling a triggered buffer state report process; and canceling a triggered recommended bit rate query process,
wherein the first operation set is irrelevant to secondary cell group (SCG) deactivation.

As one embodiment, the second operation set comprises at least one of: discarding a contention-free random access resource indicated by an explicit signaling; canceling a triggered scheduling request process; canceling a triggered power headroom report process; considering all timeAlignmentTimer timers expired; resetting a first counter, the first counter being used for beam failure recovery; and resetting all listen before talk counters (LBT_COUNTER),
wherein the second operation set is irrelevant to SCG deactivation.

As one embodiment, the second operation set comprises: canceling a triggered L1 measurement result report process.

As one embodiment, the second operation set comprises: canceling a recommended cell or a recommended reference signal resource report process.

As one embodiment, when execution of the first signaling does not depend on reception of the second signaling, execution of the first signaling comprises starting a first timer; when execution of the first signaling depends on reception of the second signaling, execution of the first signaling does not comprise starting a first timer; and expiration of the first timer is used to trigger RRC connection reestablishment, and a stopping condition of the first timer comprises successful completion of a random access process for the target SpCell.

As one embodiment, when execution of the first signaling does not depend on reception of the second signaling, a first transmitter 1102 initiates a random access process for the target SpCell accompanied by execution of the first signaling; and when execution of the first signaling depends on reception of the second signaling, the first transmitter 1102 sends a first signal, and initiates a random access process for the target SpCell accompanied by sending of the first signal,
wherein when execution of the first signaling depends on reception of the second signaling, execution of the first signaling does not accompany a random access process for the target SpCell; the first signal is sent after the first signaling and before the second signaling; and the first signal is used to report a measurement result or report a recommended target cell or a recommended reference signal resource.

As one embodiment, a first transmitter 1102, in response to sending the first signal, starts a third timer; and
the first transmitter 1102 sends a third signal in response to expiration of the third timer, wherein the third signal is used to report a measurement result or report a recommended target cell or a recommended reference signal resource.

As one embodiment, the second receiver 1101 receives the second signaling; and starts a second timer in response to reception of the second signaling,
wherein the second timer is a MAC sublayer timer.

As one embodiment, the first node is a piece of user equipment (UE).

As one embodiment, the first node is one terminal supporting a large latency difference.

As one embodiment, the first node is one terminal supporting an NTN.

As one embodiment, the first node is one aircraft or ship.

As one embodiment, the first node is one mobile phone or vehicle-mounted terminal.

As one embodiment, the first node is one relay UE and/or U2N remote UE.

As one embodiment, the first node is one IoT terminal or industrial IoT terminal.

As one embodiment, the first node is one device supporting low-latency and highreliability transmission.

As one embodiment, the first node is a secondary link communication node.

As one embodiment, the first receiver 1101 comprises at least one of an antenna 452, a receiving device 454, a receiving processor 456, a multi-antenna receiving processor 458, a controller/processor 459, a memory 460, or a data source 467 in Embodiment 4.

As one embodiment, the first transmitter 1102 comprises at least one of an antenna 452, a transmitting device 454, a transmitting processor 468, a multi-antenna transmitting processor 457, a controller/processor 459, a memory 460, or a data source 467 in Embodiment 4.

A person skilled in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module, and the present application is not limited to any specific form of software and hardware combination. The user equipment, terminals and UE in the present application include but are not limited to drones, communication modules on drones, remote-controlled aircrafts, aircrafts, small aircrafts, mobile phones, tablet computers, notebooks, vehicle-mounted communication devices, wireless sensors, Internet cards, Internet of Things terminals, RFID terminals, NB-IoT terminals, machine type communication (MTC) terminals, enhanced MTC (eMTC) terminals, data cards, Internet cards, vehicle-mounted communication devices, low-cost mobile phones, low-cost tablet computers, satellite communication devices, ship communication devices, NTN user equipment and other wireless communication devices. Base stations or system devices in the present application include but are not limited to macrocell base stations, microcell base stations, femtocells, relay base stations, NR nodes B (gNBs), transmitter receiver points (TRPs), NTN base stations, satellite devices, flight platform devices and other wireless communication devices.

The present disclosure can be implemented in other specified forms without departing from its core or basic features. Therefore, the embodiments disclosed at present should be regarded as descriptive rather than restrictive in any way. The scope of the present disclosure is determined by the attached claims rather than the previous descriptions, and all changes within their equivalent meanings and areas are considered to be comprised therein.

## Claims

1. A first node for wireless communication, comprising:
a first receiver, receiving a first signaling; wherein the first signaling comprises a first cell identity, and the first cell identity is configured for a target special cell (SpCell); and
the first receiver, executing the first signaling; wherein the behavior of executing the first signaling comprises executing a target operation set,
wherein the first signaling is a signaling of a radio resource control (RRC) layer; the first signaling comprises a first field; the first field is used to configure the target SpCell, and the first field is SpCellConfig; the target operation set is related to whether the behavior of executing the first signaling depends on reception of a second signaling; the second signaling is used to indicate execution of the first signaling, and the second signaling is a control signaling of a medium access control (MAC) layer or control information of a physical layer; when the execution of the first signaling does not depend on the reception of the second signaling, the target operation set comprises a first operation set and a second operation set; when the execution of the first signaling depends on the reception of the second signaling, the target operation set comprises only the latter of the first operation set and the second operation set; the first operation set and the second operation set are both for a MAC entity corresponding to a cell group of the target SpCell; the first operation set is orthogonal to the second operation set; the first operation set comprises at least one of clearing soft buffers of all downlink hybrid automatic repeat reQuest (HARQ) processes except for those used for multicast broadcast service (MBS) broadcast, setting new data indicators of all uplink HARQ processes to 0, for each downlink HARQ process considering next received transmission for one transport block (TB) as earliest transmission, and stopping all timers in a first timer set which comprises at least one timer; and the second operation set comprises at least one of at least canceling triggered beam failure recovery (BFR), clearing a message 3 (Msg3) buffer, and clearing a message A (MSGA) buffer.

2. The first node according to claim 1, wherein,
the first operation set comprises at least one of: initializing a first parameter of each logical channel to 0, the first parameter being used for a logical channel priority process; stopping an ongoing random access process; canceling a triggered buffer status report process; and canceling a triggered recommended bit rate query process,
wherein the first operation set is irrelevant to secondary cell group (SCG) deactivation.

3. The first node according to claim 1 or 2, wherein,
the second operation set comprises at least one of: discarding a contention-free random access resource indicated by an explicit signaling; canceling a triggered scheduling request process;
canceling a triggered power headroom report process; considering all timeAlignmentTimer timers expired; resetting a first counter, the first counter being used for beam failure recovery; and resetting all listen before talk counters (LBT_COUNTER),
wherein the second operation set is irrelevant to SCG deactivation.

4. The first node according to any one of claims 1 to 3, wherein,
the second operation set comprises: canceling a triggered L1 measurement result report process.

5. The first node according to any one of claims 1 to 3, wherein,
the second operation set comprises: canceling a recommended cell or recommended reference signal resource report process.

6. The first node according to any one of claims 1 to 5, wherein,
when the execution of the first signaling does not depend on the reception of the second signaling, the execution of the first signaling comprises starting a first timer; when the execution of the first signaling depends on the reception of the second signaling, the execution of the first signaling does not comprise starting the first timer; and expiration of the first timer is used to trigger RRC connection reestablishment, and a stopping condition of the first timer comprises successful completion of a random access process for the target SpCell.

7. The first node according to any one of claims 1 to 6, comprising:
a first transmitter, wherein when the execution of the first signaling does not depend on the reception of the second signaling, the first transmitter initiates the random access process for the target SpCell accompanied by the execution of the first signaling; and when the execution of the first signaling depends on the reception of the second signaling, the first transmitter sends a first signal, and initiates the random access process for the target SpCell accompanied by sending of the first signal,
wherein when the execution of the first signaling depends on the reception of the second signaling, the execution of the first signaling does not accompany the random access process for the target SpCell; the first signal is sent after the first signaling and before the second signaling; and the first signal is used to report a measurement result or report a recommended target cell or a recommended reference signal resource.

8. The first node according to claim 7, comprising:
the first transmitter, starting a third timer in response to sending the first signal; and
the first transmitter, sending a third signal in response to expiration of the third timer, wherein the third signal is used to report the measurement result or report the recommended target cell or the recommended reference signal resource.

9. The first node according to any one of claims 1 to 8, comprising:
a second receiver, receiving the second signaling; and starting a second timer in response to the reception of the second signaling,
wherein the second timer is a MAC sublayer timer.

10. The first node according to any one of claims 1 to 9, wherein,
the first timer set comprises: beamFailureRecovery Timer, msgB-ResponseWindow, and ra-ContentionResolutionTimer.

11. The first node according to any one of claims 1 to 10, wherein,
the second operation set is MAC resetting for L1L2 mobility.

12. The first node according to any one of claims 1 to 11, wherein,
the second signaling comprises a first identifier, and the first identifier is used to determine a version of the second signaling or whether the second signaling is modified.

13. The first node according to any one of claims 1 to 12, wherein,
the second operation set comprises: canceling a triggered L1L2 mobility-related information process.

14. The first node according to any one of claims 1 to 13, wherein,
the second operation set comprises stopping timers in a second timer set, the second timer set comprises at least one timer, and the second timer set is orthogonal to the first timer set.

15. A method in a first node for wireless communication, comprising:
receiving a first signaling; wherein the first signaling comprises a first cell identity, and the first cell identity is configured for a target special cell (SpCell); and
executing the first signaling; wherein the behavior of executing the first signaling comprises executing a target operation set,
wherein the first signaling is a signaling of a radio resource control (RRC) layer; the first signaling comprises a first field; the first field is used to configure the target SpCell, and the first field is SpCellConfig; the target operation set is related to whether the behavior of executing the first signaling depends on reception of a second signaling; the second signaling is used to indicate execution of the first signaling, and the second signaling is a control signaling of a medium access control (MAC) layer or control information of a physical layer; when the execution of the first signaling does not depend on the reception of the second signaling, the target operation set comprises a first operation set and a second operation set; when the execution of the first signaling depends on the reception of the second signaling, the target operation set comprises only the latter of the first operation set and the second operation set; the first operation set and the second operation set are both for a MAC entity corresponding to a cell group of the target SpCell; the first operation set is orthogonal to the second operation set; the first operation set comprises at least one of clearing soft buffers of all downlink hybrid automatic repeat reQuest (HARQ) processes except for those used for multicast broadcast service (MBS) broadcast, setting new data indicators of all uplink HARQ processes to 0, for each downlink HARQ process considering next received transmission for one transport block (TB) as earliest transmission, and stopping all timers in a first timer set which comprises at least one timer; and the second operation set comprises at least one of at least canceling triggered beam failure recovery (BFR), clearing a message 3 (Msg3) buffer, and clearing a message A (MSGA) buffer.
